(19) Europäisches Patentamt / European Patent Office / Office européen des brevets

(11) **EP 4 685 710 A1**

(12) **EUROPEAN PATENT APPLICATION**

(43) Date of publication:
28.01.2026 Bulletin 2026/05

(51) International Patent Classification (IPC):
*G06N 10/20* (2022.01)   *G06N 10/40* (2022.01)
*G06N 10/60* (2022.01)   *G06N 10/70* (2022.01)

(21) Application number: 25190276.3

(22) Date of filing: 17.07.2025

(52) Cooperative Patent Classification (CPC):
**G06N 10/70; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.07.2024 JP 2024118619**

(71) Applicant: **FUJITSU LIMITED**
**Kawasaki-shi, Kanagawa 211-8588 (JP)**

(72) Inventor: **AKAHOSHI, Yutaro**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM COMPUTATION SUPPORT METHOD, AND INFORMATION PROCESSING APPARATUS**

(57) An information processing apparatus uses, as an operation target, each of a plurality of partial areas in an available area in which physical qubits available for the phase rotation of a first rotation angle of a state of a logical qubit are arranged. The information processing apparatus instructs a quantum computer to execute an operation of generating a first ancilla state used for the phase rotation of the first rotation angle on each of the plurality of partial areas. The information processing apparatus instructs the quantum computer to execute a phase rotation operation using the first ancilla state indicated in a first partial area in which the first ancilla state has been successfully generated, by using the logical qubit as an operation target.

FIG. 1

EP 4 685 710 A1

**Description**

FIELD

The embodiments discussed herein relate to a computer program, a quantum computation support method, and an information processing apparatus.

BACKGROUND

In computation using a quantum computer, quantum computation according to a quantum circuit is executed by executing gate operations on qubits. The individual qubit is a minimum unit of information used for computation, and corresponds to a bit (classical bit) of a classical computer. However, unlike the classical bit, the qubit may also take a superposition state of "0" and "1".

Qubit information may be destroyed (an error may occur) due to interaction with an environment, an error in gate operation, or the like. Countermeasures against this error include quantum error correction and quantum error mitigation.

Quantum error correction is a process of detecting occurrence of an error and correcting the error by combining and encoding a plurality of qubits (redundancy process). Hereinafter, a qubit not encoded will be referred to as a physical qubit, and a set of encoded qubits will be referred to as a logical qubit. Quantum error mitigation is a process in which computation is executed with an error, and the influence of the error is mitigated by transformation of a quantum circuit, extrapolation of a measurement result, or the like.

A quantum computer that executes quantum computation while executing quantum error correction on logical qubits is called a fault-tolerant quantum computer (FTQC). In FTQC, any quantum computation is executable by combining predetermined basic gates. The predetermined basic gates are, for example, an H gate, a CNOT gate, an S gate, and a T gate. The H gate, the CNOT gate, and the S gate are quantum gates that execute a Clifford operation, and the T gate is a quantum gate that executes a non-Clifford operation. The set of these basic gates is called Clifford + T.

Among the basic gates of Clifford + T, the T gate uses a large number of physical qubits for error correction. Therefore, it is difficult to implement FTQC with Clifford + T.

As a technique for reducing the number of physical qubits used for error correction, for example, a highefficiency phase-rotation-gate quantum computing architecture called a space-time efficient analog rotation quantum computing (STAR) architecture has been proposed. As a method of applying a gate operation to a logical qubit, a method called lattice surgery has been proposed. See, for example, the following literatures.

Yutaro Akahoshi, Kazunori Maruyama, Hirotaka Oshima, Shintaro Sato, and Keisuke Fujii, "Partially Fault-tolerant Quantum Computing Architecture with Error-corrected Clifford Gates and Space-time Efficient Analog Rotations", PRX Quantum 5, 010337, 5 March 2024

Dominic Horsman, Austin G Fowler, Simon Devitt and Rodney Van Meter, "Surface code quantum computing by lattice surgery", New Journal of Physics, 7 December 2012, Volume 14

Daniel Litinski, "A Game of Surface Codes: Large-Scale Quantum Computing with Lattice Surgery", Quantum, 2019-03-05, volume 3, page 128

In the STAR architecture, a phase rotation gate is used, instead of the T gate of Clifford + T. The phase rotation gate is implemented using a logic qubit in an ancilla state. Therefore, the execution time of the phase rotation gate is affected by the time needed to generate the ancilla state. In a case where the physical error rate of a physical qubit used for generating the ancilla state is large, or in a case where the code distance of the logical qubit representing the ancilla state is large, the failure probability of the ancilla state generation process becomes very large. If the generation of the ancilla state fails many times and the ancilla state generation process is repeated, the execution time of the phase rotation gate is prolonged.

SUMMARY

In one aspect, it is desirable to suppress an increase in the execution time of phase rotation gates.

In one aspect, there is provided a computer program that causes a computer to execute a process including: instructing a quantum computer to execute an operation of generating a first ancilla state used for phase rotation of a first rotation angle of a state of a logical qubit by using, as an operation target, each of a plurality of partial areas in an available area in which physical qubits available for the phase rotation of the first rotation angle are arranged; and instructing the quantum computer to execute a phase rotation operation using the first ancilla state indicated in a first partial area in which the first ancilla state has been successfully generated, by using the logical qubit as an operation target.

BRIEF DESCRIPTION OF DRAWINGS

The invention is described, by way of example only, with reference to the following drawings, in which:

FIG. 1 is a diagram illustrating an example of a quantum computation support method according to a first embodiment;
FIG. 2 is a diagram illustrating an example of a configuration of a quantum computing system;
FIG. 3 is a diagram illustrating an example of hardware of the quantum computing system;
FIG. 4 is a diagram illustrating characteristics of qubits;
FIG. 5 is a diagram illustrating an example of quantum error correction;
FIG. 6 is a diagram illustrating an example of basic gates used for fault-tolerant quantum computation;
FIG. 7 is a diagram illustrating an example of a quantum circuit that executes a phase rotation gate operation;
FIG. 8 is a diagram illustrating an example of injection;
FIG. 9 is a diagram illustrating an example of expansion to a surface code;
FIG. 10 is a diagram illustrating an example of an injection failure probability;
FIG. 11 is a diagram illustrating a relationship between a logical qubit and a patch;
FIG. 12 is a diagram illustrating an example of merging and splitting, which are basic operations of lattice surgery;
FIG. 13 is a diagram illustrating an example of deformation which is a basic operation of lattice surgery;
FIG. 14 is a diagram illustrating an example of logic gate operations by lattice surgery;
FIG. 15 is a diagram illustrating an example of a logical CNOT gate operation by lattice surgery;
FIG. 16 is a diagram illustrating an example of an arrangement of logical qubits;
FIG. 17 is a diagram illustrating an example of a method of implementing a phase rotation gate by lattice surgery;
FIG. 18 is a diagram illustrating an example of parallel injection;
FIG. 19 is a diagram illustrating an example of pre-injection;
FIG. 20 is a diagram illustrating an example of the execution process of a phase rotation gate with parallel injection and pre-injection;
FIG. 21 is a diagram illustrating an example of a realtime update process of an injection area;
FIG. 22 is a diagram illustrating an example of an available area allocation method;
FIG. 23 is a diagram illustrating an example of connection between patches for which the injection has succeeded and operation target patches;
FIG. 24 is a block diagram illustrating an example of functions for quantum computation in the quantum computation system;
FIG. 25 is a diagram illustrating an example of functions of a phase rotation control unit;
FIG. 26 is a diagram illustrating an example of functions of an injection area determination unit;
FIG. 27 is a diagram illustrating an example of functions of a RUS execution control unit;
FIG. 28 is a flowchart illustrating an example of a procedure of a quantum computation support process in a classical computer;
FIG. 29 is a flowchart illustrating an example of a procedure of a quantum circuit execution process;
FIG. 30 is a flowchart illustrating an example of a procedure of a phase rotation process;
FIG. 31 is a flowchart illustrating an example of a procedure of the first half of an injection and logical ZZ measurement process;
FIG. 32 is a flowchart illustrating an example of the procedure of the second half of the injection and logical ZZ measurement process;
FIG. 33 is a flowchart illustrating an example of a procedure of an injection area update process;
FIG. 34 is a diagram illustrating a first example of a verification result of the gate operation time of phase rotation gates; and
FIG. 35 is a diagram illustrating a second example of the verification result of the gate operation time of the phase rotation gates.

DESCRIPTION OF EMBODIMENTS

Hereinafter, embodiments will be described with reference to the drawings. Each embodiment may be implemented by combining a plurality of embodiments within a consistent range.

[First Embodiment]

A first embodiment is a quantum computation support method for suppressing an increase in the execution time of the logic gate operation of a phase rotation gate on a logic qubit.

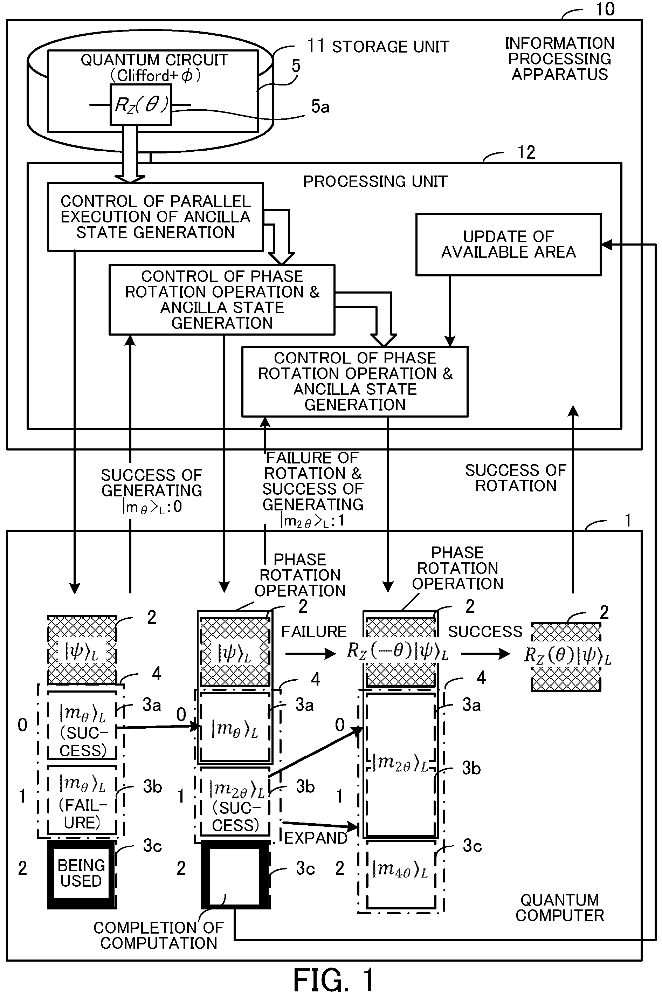

FIG. 1 is a diagram illustrating an example of a quantum computation support method according to the first embodiment. FIG. 1 illustrates an information processing apparatus 10 for implementing a quantum computation support method. The information processing apparatus 10 is able to implement the quantum computation support method by executing, for example, a quantum computation support program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores a quantum circuit 5 indicating a quantum computation procedure. The quantum circuit 5 is, for example, a quantum circuit in which Clifford gates and a phase rotation gate 5a are merged.

The processing unit 12 implements quantum computation according to the quantum circuit 5 by controlling a quantum computer 1. The processing unit 12 instructs the quantum computer 1 to execute the gate operations of the quantum gates indicated in the quantum circuit 5. When the phase rotation gate 5a is executed, the processing unit 12 instructs the quantum computer 1 to execute the phase rotation in the following procedure. The phase rotation gate 5a indicates a rotation angle "$\theta$", which will be referred to as a first rotation angle.

The processing unit 12 determines an available area 4 in which the physical qubits available for the phase rotation of the first rotation angle "$\theta$" of the state of a logical qubit 2 are arranged. For example, in an area in which physical qubits are arranged, an available area adjacent to the logical qubit 2, which is a phase rotation operation target (an area in which physical qubits that are not being used in other computations are arranged), is set as the available area 4.

In the area in which the physical qubits are arranged, for example, a computation margin area, which is not allocated to a qubit included in the quantum circuit 5 as an operation target, is provided. The computation margin area is managed by being divided into partial areas 3a to 3c having a size corresponding to the code distance of the logical qubit 2, for example. The identification number of the partial area 3a is "0", the identification number of the partial area 3b is "1", and the identification number of the partial area is "2".

In the example in FIG. 1, the partial area 3c is being used in a logical quantum gate operation different from the phase rotation gate 5a to be executed. Therefore, the partial areas 3a and 3b, which are continuous available areas adjacent to the area representing the logical qubit 2, which is the operation target of the phase rotation gate 5a, are used as the available area 4.

The processing unit 12 instructs the quantum computer 1 to execute an operation of generating a first ancilla state ($|m_\theta>_L$) used for the phase rotation of the first rotation angle by using, as an operation target, each of the plurality of partial areas 3a and 3b in the available area 4. The operation of generating the first ancilla state ($|m_\theta>_L$) on each of the plurality of partial areas 3a and 3b is executable in parallel. The operation of generating the first ancilla state ($|m_\theta>_L$) may fail due to the influence of, for example, physical errors that occur in a physical qubit. It is possible to determine whether the operation of generating the first ancilla state ($|m_\theta>_L$) on the partial areas 3a and 3b has succeeded or failed by, for example, executing an error detection circuit on a code representing the first ancilla state ($|m_\theta>_L$).

In the example in FIG. 1, the generation of the first ancilla state ($|m_\theta>_L$) has succeeded in the partial area 3a, but the generation of the first ancilla state ($|m_\theta>_L$) has failed in the partial area 3b. The processing unit 12 recognizes that the first ancilla state ($|m_\theta>_L$) has been successfully generated in the partial area 3a having the identification number "0" based on information obtained from the quantum computer 1 (for example, the execution result of the error detection circuit).

Therefore, the processing unit 12 instructs the quantum computer 1 to execute the phase rotation operation using the first ancilla state ($|m_\theta>_L$) indicated in the first partial area (partial area 3a) in which the first ancilla state ($|m_\theta>_L$) has been successfully generated, by using the logical qubit 2 as the operation target.

In this way, by executing the operation of generating the first ancilla state ($|m_\theta>_L$) with the plurality of partial areas 3a and 3b in parallel, the possibility that the first ancilla state ($|m_\theta>_L$) is generated quickly increases. As a result, it is possible to prevent the phase rotation operation from being prolonged due to repetition of failure of generation of the first ancilla state ($|m_\theta>_L$).

For the logic quantum gate operation of phase rotation, it is possible to use a phase rotation circuit that stochastically applies either phase rotation in a target rotation direction or phase rotation in a direction opposite to the target rotation direction to the logic qubit 2. By executing this phase rotation circuit, when the phase rotation in the opposite direction occurs, the processing unit 12 generates a second ancilla state ($|m_{2\theta}>_L$) in which the rotation angle is doubled, and executes the phase rotation operation again using the second ancilla state ($|m_{2\theta}>_L$). In the phase rotation circuit, the computation time per one time is short. Furthermore, the probability of repeating the circuit many times due to the inverse rotation direction is exponentially small. Therefore, the target phase rotation is achieved in the short time on average.

When the phase rotation circuit that stochastically determines the rotation direction is used, the processing unit 12 is able to instruct the quantum computer 1 to generate the second ancilla state ($|m_{2\theta}>_L$) in advance in anticipation of the opposite rotation. For example, when the generation of the first ancilla state ($|m_\theta>_L$) has succeeded, the processing unit 12 instructs the quantum computer 1 to execute the phase rotation circuit that stochastically determines the rotation direction on the logical qubit 2 as the operation target.

Next, while the quantum computer 1 is executing the phase rotation circuit, the processing unit 12 determines a second partial area (partial area 3b) that is not used by the phase rotation circuit, between the plurality of partial areas 3a and 3b in the available area 4. The processing unit 12 instructs the quantum computer 1 to execute an operation of generating a second ancilla state ($|m_{2\theta}\rangle_L$) used for phase rotation of a second rotation angle that is twice the first rotation angle, by using, as an operation target, the determined second partial area.

When the opposite phase rotation is generated by the execution of the phase rotation circuit, the processing unit 12 instructs the quantum computer 1 to execute the gate operation of the phase rotation circuit using the second ancilla state ($|m_{2\theta}\rangle_L$) indicated in the second partial area as an input on the logical qubit 2 as the operation target. In the example in FIG. 1, the second ancilla state ($|m_{2\theta}\rangle_L$) generated in the partial area 3b, which is the second partial area, is expanded to the partial area 3a adjacent to the logical qubit 2 as the operation target. Then, the phase rotation operation is executed using the second ancilla state ($|m_{2\theta}\rangle_L$) represented by the partial areas 3a and 3b.

By executing the operation of generating the second ancilla state ($|m_{2\theta}\rangle_L$) in advance in this way, when the phase rotation results in the opposite rotation, the next phase rotation operation is quickly executed. As a result, it is possible to efficiently execute the operation of the phase rotation with the phase rotation circuit that stochastically determines the rotation direction.

The ancilla state generation operation is executed in a shorter time than the gate operation of the phase rotation circuit in which the rotation direction is stochastically determined. Therefore, the processing unit 12 may instruct the quantum computer 1 to repeatedly execute generation of the second ancilla state ($|m_{2\theta}\rangle_L$) using the second partial area until the second ancilla state ($|m_{2\theta}\rangle_L$) is successfully generated in the second partial area while the quantum computer 1 is executing the gate operation of the phase rotation circuit. This improves the possibility that the second ancilla state ($|m_{2\theta}\rangle_L$) is successfully generated before the gate operation of the phase rotation circuit is completed.

The processing unit 12 is able to execute an operation of generating a third ancilla state ($|m4_{\theta}\rangle_L$) in advance by further doubling the rotation angle on the assumption that the phase rotation results in a reverse rotation during the phase rotation operation using the second ancilla state ($|m_{2\theta}\rangle_L$). If there is an area that has become available during the previous phase rotation operation, the processing unit 12 is able to dynamically update the available area 4.

For example, the processing unit 12 updates the range of the available area 4 based on the use state of a physical qubit outside the available area 4 while the quantum computer 1 is executing the gate operation of the phase rotation circuit. In the example in FIG. 1, during the first phase rotation operation, the computation using the partial area 3c ends, and the partial area 3c becomes available. Therefore, the processing unit 12 expands the range of the available area 4 such that the range includes the partial area 3c. In this way, the operation of generating the third ancilla state ($|m_{4\theta}\rangle_L$) executed during the phase rotation operation (the second phase rotation operation) using the second ancilla state ($|m_{2\theta}\rangle_L$) is executed using the partial area 3c. Since the operation of generating the third ancilla state ($|m_{4\theta}\rangle_L$) in advance is executed, even if the second phase rotation operation fails, the third phase rotation operation is executed quickly.

In the example in FIG. 1, the phase rotation operation using the second ancilla state ($|m_{2\theta}\rangle_L$) succeeds, and the state of the logical qubit 2 represents a state in which the phase has been rotated by the first rotation angle from the original state. The processing unit 12 detects the success of the phase rotation and ends the logic gate operation of the phase rotation gate 5a.

Of the quantum gates indicated in the quantum circuit 5, a plurality of quantum gates may be executed in parallel as long as the qubits to be operated do not overlap. Therefore, the quantum computer 1 may execute a plurality of phase rotation gates 5a in parallel. In this case, the processing unit 12 may allocate the available areas such that the sizes of the available areas of the plurality of phase rotation gates 5a are as even as possible.

For example, when there are a plurality of logical qubits 2 as operation targets, the processing unit 12 allocates an area allocatable to two or more of the available areas 4, each of which corresponds to one of the plurality of logical qubits 2, to an available area having a smaller size among the available areas 4 to which the area is allocatable. As a result, the sizes of the available areas 4 are equalized. If there is a phase rotation gate whose available area 4 is smaller in size than others, only the logic gate operation of this phase rotation gate may be prolonged, and the execution time of the quantum circuit 5 may be prolonged. By equalizing the sizes of the available areas 4, it is possible to suppress such an increase in execution time.

[Second Embodiment]

The second embodiment is a quantum computing system capable of suppressing an increase in the execution time of phase rotation gates in quantum computation using a STAR architecture.

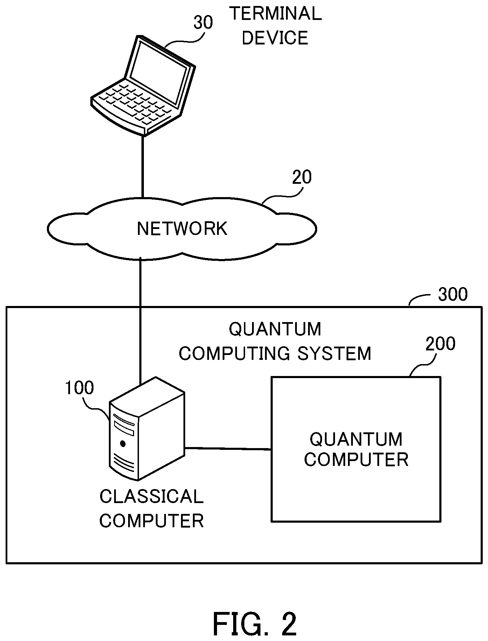

FIG. 2 is a diagram illustrating an example of a configuration of a quantum computing system. A quantum computing system 300 is, for example, a computer system that executes computation using the principle of quantum mechanics. The quantum computing system 300 includes a classical computer 100 and a quantum computer 200. The classical computer 100 is a von Neumann computer. The quantum computer 200 is a non-Neumann computer that executes quantum computation by applying quantum gates to qubits.

A terminal device 30 is connected to the classical computer 100 via a network 20. The terminal device 30 is a computer used by a user who requests the quantum computing system 300 to execute quantum computation. The classical computer 100 receives a quantum computation request including a quantum circuit from, for example, the terminal device 30. The quantum circuit indicates the order of gate operations on qubits by the arrangement of elements such as quantum gates. The individual qubit is a bit capable of representing a state of superposition of a state of "0" and a state of "1".

In accordance with the quantum computation request received from the terminal device 30, the classical computer 100 instructs the quantum computer 200 to execute the gate operations on the qubits. The classical computer 100 acquires the measurement result of each qubit from the quantum computer 200.

The quantum computer 200 executes the gate operations on the qubits according to instructions from the classical computer 100. The quantum computer 200 measures the state of the individual quantum gate and transmits the measurement result to the classical computer 100.

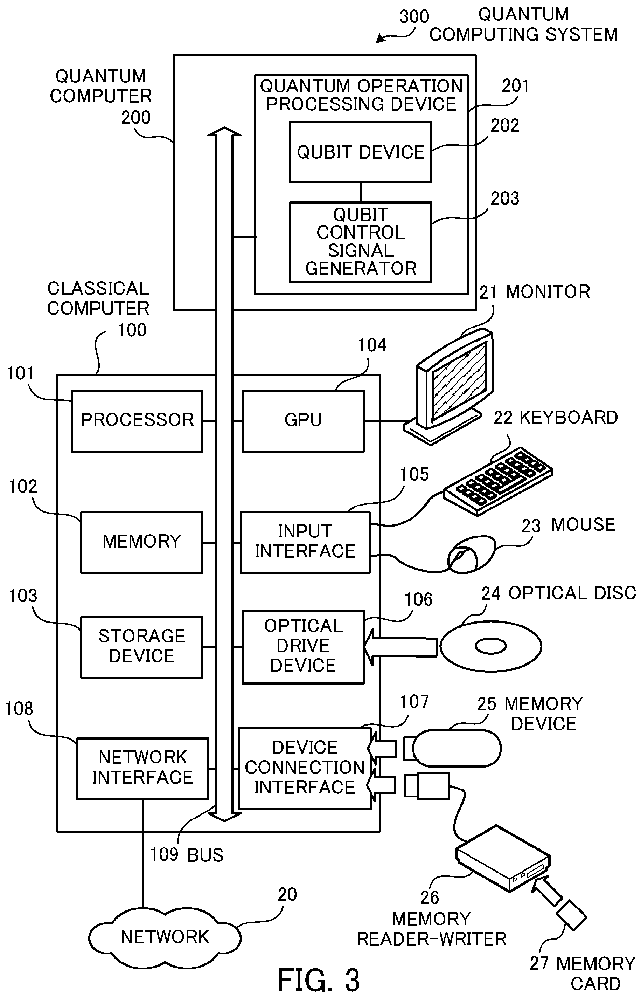

FIG. 3 is a diagram illustrating an example of hardware of the quantum computing system. The entire classical computer 100 is controlled by a processor 101. A memory 102 and a plurality of peripheral devices are connected to the processor 101 via a bus 109. The classical computer 100 may be a multiprocessor system having a plurality of processors. A set of processors in a multiprocessor system may be referred to as the processor 101. The processor 101 may be referred to as processor circuitry. Each of the plurality of processors is able to execute at least one of the plurality of processes executed by the classical computer 100. When there are a plurality of related processes, two or more processes of the plurality of processes may be executed by different processors. The processor 101 is, for example, a central processing unit (CPU), a micro processing unit (MPU), or a digital signal processor (DSP). At least a part of the functions that the processor 101 implements by executing a program may be implemented by an electronic circuit such as an application specific integrated circuit (ASIC) or a programmable logic device (PLD).

The memory 102 is used as a main storage device of the classical computer 100. The memory 102 temporarily stores an operating system (OS) program and at least part of the application programs to be executed by the processor 101. The memory 102 also stores various kinds of data used for processing by the processor 101. As the memory 102, for example, a volatile semiconductor storage device such as a random access memory (RAM) is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes and reads data to and from its internal recording medium. The storage device 103 is used as an auxiliary storage device of the classical computer 100. The storage device 103 stores OS programs, application programs, and various kinds of data. As the storage device 103, for example, a hard disk drive (HDD) or a solid state drive (SSD) may be used.

The GPU 104 is an arithmetic device that executes image processing. The GPU 104 is an example of a graphic controller. A monitor 21 is connected to the GPU 104. The GPU 104 displays an image on the screen of the monitor 21 in accordance with an instruction from the processor 101. Examples of the monitor 21 include a display device using organic electro luminescence (EL) and a liquid crystal display device.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 uses laser light or the like, to read data recorded on an optical disc 24 or write data to the optical disc 24. The optical disc 24 is a portable recording medium on which data is recorded so as to be readable by reflection of light. The optical disc 24 may be a digital versatile disc (DVD), a DVD-RAM, a compact disc read-only memory (CD-ROM), a CD-recordable (CD-R)/CD-rewritable (CD-RW), or the like.

The device connection interface 107 is a communication interface for connecting peripheral devices to the classical computer 100. For example, a memory device 25 and a memory reader-writer 26 may be connected to the device connection interface 107. The memory device 25 is a recording medium having a function of communicating with the device connection interface 107. The memory reader-writer 26 is a device that writes data to a memory card 27 or reads data from the memory card 27. The memory card 27 is a card-type recording medium.

The network interface 108 is connected to the network 20. The network interface 108 transmits and receives data to and from other computers or communication devices via the network 20. The network interface 108 is a wired communication interface connected to a wired communication device such as a switch or a router via a cable. Alternatively, the network interface 108 may be a wireless communication interface connected to a wireless communication device such as a base station or an access point by radio waves such that the network interface 108 is able to communicate with the wireless communication device.

The quantum computer 200 shares the bus 109 with the classical computer 100. The quantum computer 200 is able to execute information communication with each element in the classical computer 100 via the bus 109.

The quantum computer 200 includes a quantum operation processing device 201 connected to the bus 109. The quantum operation processing device 201 executes gate operations on qubits based on quantum gates indicated in a quantum circuit and measures the states of these qubits. The quantum operation processing device 201 includes a qubit device 202 and a qubit control signal generator 203. The qubit device 202 holds states of a plurality of qubits and executes gate operations on the qubits. The qubit control signal generator 203 generates a control signal instructing a gate operation or measurement on a qubit.

The quantum computing system 300 is able to implement the processing functions of the second embodiment with the hardware described above. The information processing apparatus 10 described in the first embodiment may also be implemented by hardware similar to that of the classical computer 100 illustrated in FIG. 3.

The classical computer 100 implements the processing functions of the second embodiment by executing a program recorded in a computer-readable recording medium, for example. The program in which the processing contents to be executed by the classical computer 100 are written may be recorded in various recording media. For example, the program to be executed by the classical computer 100 may be stored in the storage device 103. The processor 101 loads at least part of the programs in the storage device 103 into the memory 102 and executes the program. The program to be executed by the classical computer 100 may be recorded in a portable recording medium such as the optical disc 24, the memory device 25, or the memory card 27. The program stored in the portable recording medium becomes executable after being installed in the storage device 103 under the control of the processor 101, for example. Alternatively, the processor 101 may read the program directly from the portable recording medium and execute the program.

Next, an outline of error correction in quantum computation and usefulness of the STAR architecture will be described.

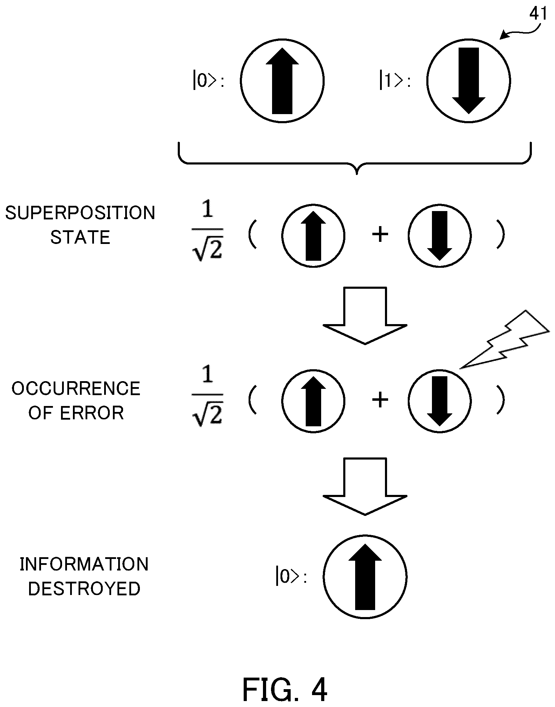

FIG. 4 is a diagram illustrating characteristics of qubits. A qubit 41, which is the minimum unit of information in the quantum computer 200, is settable in a state "10>", a state "|1>", or a superposition state of "|0>" and "|1>". In the superposition state, the probability that the measured value of the qubit 41 indicates "|0>" or "|1>" is stochastically determined. For example, when the probability of 10> and the probability of |1> are the same, the superposition state of this qubit 41 is expressed as "$2^{-1/2}(|0) + |1>)$".

The information about the qubit 41 could be destroyed (an error occurs) by an interaction with an environment, an error in an operation, or the like. For example, if the superposition state is destroyed by an error, the state of the qubit 41 changes to the state "10>", for example. To improve the computation accuracy, a qubit in which an error has occurred needs to be detected, and the state of this qubit needs to be corrected to its correct state.

Thus, a technique referred to as quantum error correction has been proposed. In quantum error correction, a qubit is encoded by a plurality of qubits (the encoded qubit is called a "logical qubit"). When encoded, the state of one or a plurality of logical qubits is expressed by a plurality of physical qubits used in the encoding. Based on the overall state of the plurality of encoded qubits, the qubit in which the error has occurred is detected and corrected.

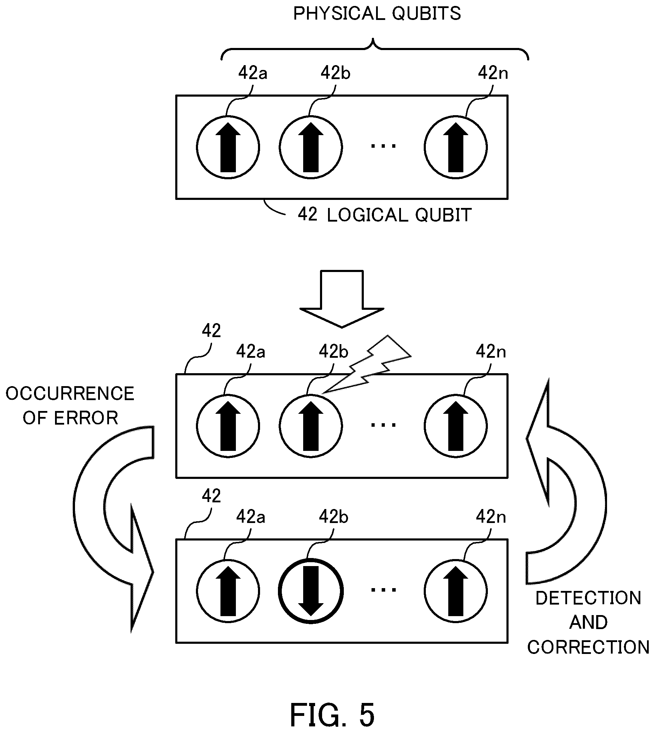

FIG. 5 is a diagram illustrating an example of the quantum error correction. As illustrated in FIG. 5, a logical qubit 42 is defined by a plurality of physical qubits 42a, 42b, ..., and 42n. In the example in FIG. 5, the state of each of the plurality of physical qubits 42a, 42b, ..., 42n represents "10>". In this state, an error occurs, and the state of the physical qubit 42b is consequently inverted to "|1>". In this case, the error is detected based on information obtained from the state of each of the plurality of physical qubits 42a, 42b, ..., and 42n. Next, the physical qubit 42b in which the error has occurred is determined, and the state of the physical qubit 42b is corrected.

By executing the quantum error correction in this way as needed, even if an error occurs in a physical qubit, as long as the number of errors is in an allowable range, the logical qubit 42 is maintained in its correct state. It is possible to implement the quantum computation associated with the quantum error correction on logical qubits by combining predetermined basic gates.

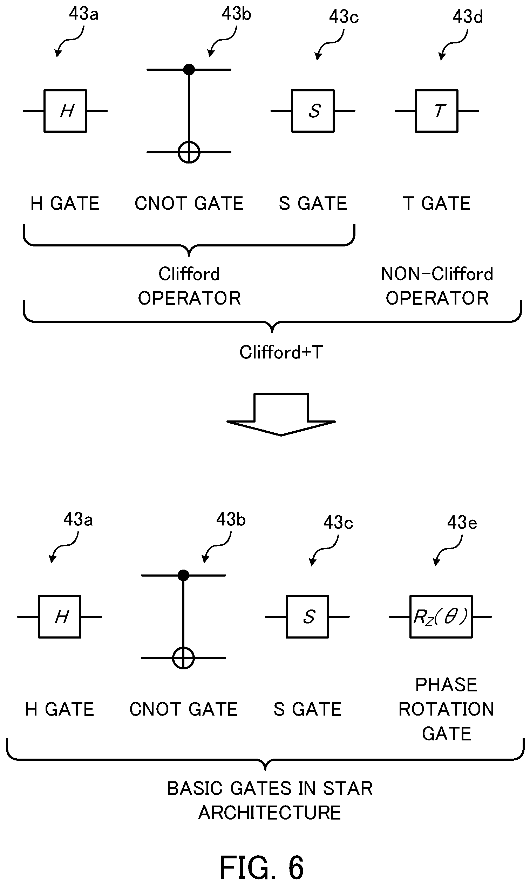

FIG. 6 is a diagram illustrating an example of basic gates used for fault-tolerant quantum computation. The basic gates used for quantum computation associated with the quantum error correction are an H gate 43a, a CNOT gate 43b, an S gate 43c, and a T gate 43d. The H gate 43a is called a Hadamard gate and is a quantum gate that rotates a state by 180 degrees around an axis that is tilted at an angle of 45 degrees between the Z axis and the X axis. The CNOT gate 43b is a quantum gate that maintains the state of the target qubit if the state of the control qubit represents "10>" and inverts the state of the target qubit if the state of the control qubit represents "11>". The S gate 43c is a quantum gate that rotates the state by $\pi/2$ around the Z axis. The T gate 43d is a quantum gate that rotates the state by $\pi/4$ around the Z axis.

Among these quantum gates, the H gate 43a, the CNOT gate 43b, and the S gate 43c are called "Clifford operators". In contrast, the T gate is called "non-Clifford operator". These basic gates are collectively called "Clifford + T". "Clifford + T" used in the computation by the quantum computer 200 corresponds to AND, XOR, and NOT used in the classical computer 100. That is, it is possible to execute any kinds of quantum computations by combining the quantum gates of "Clifford + T".

In fault-tolerant quantum computation based on Clifford + T, one million or more physical qubits are typically used to execute useful computation. A large number of physical qubits are used for error correction of the T gates 43d (error correction cost is large). This is a major factor in increasing the number of physical qubits for implementing FTQC.

Moreover, in order to implement a rotation operation of an arbitrary angle, in most cases, the gate operation of a T gate 43d is repeated about several tens of times. Therefore, the implementation of a rotation of an arbitrary angle with a T gate 43d decreases the quantum circuit execution efficiency.

Therefore, in the STAR architecture, a phase rotation gate 43e is used as a basic gate, instead of the T gate 43d of Clifford + T. The phase rotation gate 43e in the STAR architecture is implemented using a phase rotation circuit using a predetermined ancilla state "$|m_\theta\rangle_L$". The ancilla state may also be referred to as a resource state.

The state "$|m_\theta\rangle$" is expressed as "$|m_\theta\rangle = R_Z(\theta)|+\rangle = {}_2{}^{-1/2}(e^{-i\theta/2}|0\rangle + e^{+i\theta/2}|1\rangle)$". $\theta$ is an arbitrary rotation angle. The subscript L of the ancilla state "$|m_\theta\rangle$" indicates that the state is encoded by a plurality of physical qubits. Hereinafter, the subscript L will also be added to the state of a logical qubit.

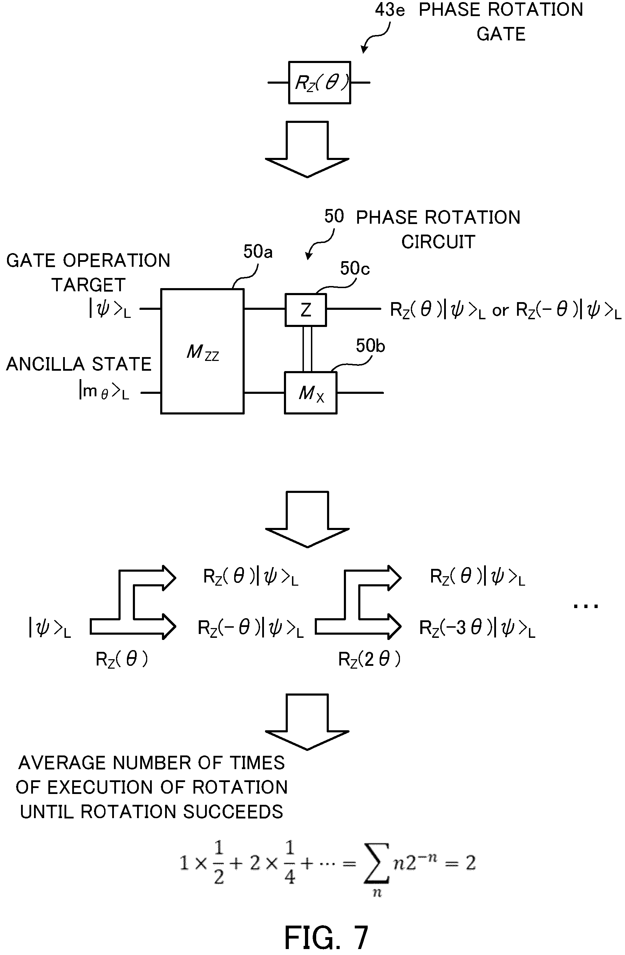

FIG. 7 is a diagram illustrating an example of a quantum circuit that executes a phase rotation gate operation. A phase rotation circuit 50 is a quantum circuit that implements a phase rotation ($R_Z(\theta)$) of an angle $\theta$. In the phase rotation circuit 50, an operation target state "$|\psi\rangle_L$" is input to a first qubit, and an ancilla state "$|m_\theta\rangle_L$" is input to a second qubit.

In the phase rotation circuit 50, first, a logical ZZ measurement ($M_{ZZ}$) 50a is executed on the second qubit. Next, a logical Z measurement ($M_X$) 50b is executed on the second qubit. If the measurement result of a logical Z measurement 50b is "-1", the gate operation of the Z gate 50c is executed on the first qubit.

If the result of the logical ZZ measurement is "+1", the state of the first qubit is "$R_Z(\theta)|\psi\rangle_L$". If the result of the logical ZZ measurement is "-1", the state of the first qubit is "$R_Z(-\theta)|\psi\rangle_L$". In this way, after the phase rotation gate operation by the phase rotation circuit 50, "$R_Z(\theta)|\psi\rangle_L$" or "$R_Z(-\theta)|*\rangle_L$" is obtained. That is, the output state stochastically indicates reverse rotation. The probability that the output state indicates "$R_Z(\theta)|\psi\rangle_L$" and the probability that the output state indicates "$R_Z(-\theta)|\psi\rangle_L$" are each "1/2".

Since the output state of the phase rotation circuit 50 stochastically indicates the target rotation (forward rotation) or reverse rotation, the quantum computing system 300 repeatedly executes the same gate operation until the target rotation is successfully obtained.

For example, if the gate operation of the rotation of the target angle $\theta$ fails and the rotation indicates the reverse rotation ($-\theta$), the quantum computing system 300 executes the rotation of the angle $2\theta$ in the next rotation gate operation. If the gate operation of the rotation of the angle $2\theta$ also fails and the rotation indicates the reverse rotation ($-2\theta$), the total of the two rotation operations becomes $-3\theta$. In this case, the quantum computing system 300 executes, for example, rotation of an angle $4\theta$ in the next rotation gate operation. By executing this process with $2\pi$ periodicity, it is possible to make the rotation angle always fall within $[-\pi, \pi)$.

If the probability that the rotation succeeds and the probability that the rotation fails are 1/2, the average number of times of the operation executed until the rotation succeeds is "$1 \times (1/2) + 2 \times (1/4) + ... = \Sigma_n n2^{-n} = 2$". That is, the quantum computing system 300 is able to achieve the target phase rotation by executing the gate operation of the phase rotation circuit 50 twice on average.

Hereinafter, this process of repeating the stochastic phase rotation using the phase rotation circuit 50 until a target rotation angle is obtained will be referred to as repeat-until-success (RUS).

The ancilla state "$|m_\theta\rangle_L$" is used as an input to the phase rotation circuit 50 in the RUS. Therefore, the process of generating the ancilla state "$|m_\theta\rangle_L$" is executed before executing the phase rotation. The generation efficiency of the ancilla state "$|m_\theta\rangle_L$" affects the execution efficiency of the phase rotation gate operation. The process for preparing the ancilla state "$|m_\theta\rangle_L$" for realizing the phase rotation gate operation will be referred to as "injection".

The injection may be executed using an ancilla state generation circuit.

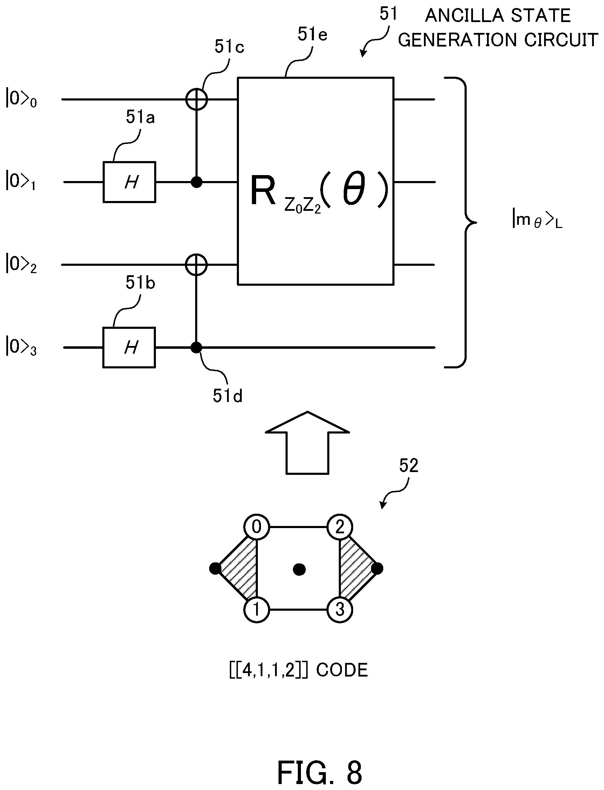

FIG. 8 is a diagram illustrating an example of the injection. The ancilla state "$|m_\theta\rangle_L$" input to the phase rotation circuit 50 may be generated by applying an error detection code called a [[4,1,1,2]] code 52.

Generally, when a [[n,k,r,d]] code is written, each number has the following meaning.

n: the number of physical qubits used for encoding
k: the number of logical qubits of the code
r: the number of gauge qubits of the code
d: code distance of the code

A gauge qubit is a quantum state indicating a (redundant) degree of freedom (gauge degree of freedom) which is independent of a logical qubit and is not used for computation.

The [[4,1,1,2]] code 52 is a code having one logical qubit and one gauge qubit. Note that there is also a notation method in which the logic qubit and the gauge qubit are collectively denoted as a [[4,2,2]] code.

The input states of the four physical qubits in an ancilla state generation circuit 51 are all "$|0\rangle$". In the ancilla state generation circuit 51, first, the gate operations of an H gates 51a and 51b are executed on second and fourth physical qubits among the four physical qubits. Next, the gate operation of a CNOT gate 51c is executed using the second physical qubit as a control qubit and a first physical qubit as a target qubit. At the same time, the gate operation of a CNOT gate 51d is executed using the fourth physical qubit as a control qubit and a third physical qubit as a target qubit. Then, a 2-qubit rotation gate 51e around the Z-axis is executed on the first physical qubit and the third physical qubit.

The operation of the 2-qubit rotation gate 51e is "$R_{Z0Z2}(\theta) = e^{-i(1/2)\theta Z0Z2}$" (an individual number following Z is a subscript of Z indicating the qubit to be operated). When the operation of the 2-qubit rotation gate 51e is expressed by a matrix, Expression (1) is obtained (the subscripts indicating the qubits to be operated are omitted).

$$R_{ZZ}(\theta) = exp\left(-i\frac{\theta}{2}ZZ\right) = \begin{pmatrix} e^{-i\frac{\theta}{2}} & 0 & 0 & 0 \\ 0 & e^{i\frac{\theta}{2}} & 0 & 0 \\ 0 & 0 & e^{i\frac{\theta}{2}} & 0 \\ 0 & 0 & 0 & e^{-i\frac{\theta}{2}} \end{pmatrix} \quad (1)$$

The 2-qubit rotation gate 51e indicated in Expression (1) is easily executed in the quantum computer 200. For example, the 2-qubit rotation gate 51e may be implemented by using an XX rotation gate $R_{XX}(\theta)$ and an H gate in the case of an ion trap type quantum computer. The 2-qubit rotation gate 51e may be implemented by using, for example, a cross resonance gate $R_{ZX}(\theta)$ and an H gate in the case of a superconducting quantum computer. When use of these is not applicable, the 2-qubit rotation gate 51e may be executed by combining a CNOT gate and an RZ gate ($R_Z(\theta)$). The output of the ancilla state generation circuit 51 is an ancilla state "$|m_\theta>_L$" encoded by the [[4,1,1,2]] code 52 (the state of the gauge qubit is omitted).

Error detection by the [[4,1,1,2]] code 52 is executed on the generated ancilla state. If no error is detected, the generated ancilla state remains encoded and is used for an encoded phase rotation gate operation. As a result, the phase rotation is implemented without decoding, and an increase in the error rate due to decoding is prevented.

If an error is detected in the generated ancilla state, the ancilla state is discarded, and the ancilla state generation process is executed again by the ancilla state generation circuit 51. This makes it possible to generate ancilla states with as few errors as possible.

The probability that the generated ancilla state results in an error and the generation process is executed again is affected by the error rate of the physical qubits used in the ancilla state generation circuit 51. The ancilla state generated by the [[4,1,1,2]] code 52 is expanded to the code of the code distance needed for the input logical qubit of the phase rotation circuit 50.

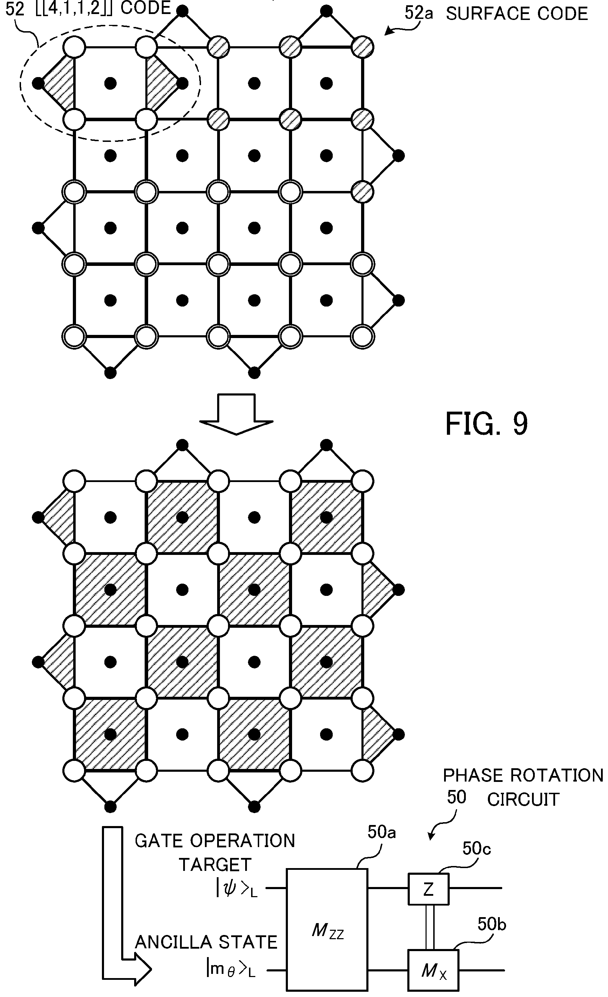

FIG. 9 is a diagram illustrating an example of expansion to a surface code. A surface code 52a is obtained by expanding the [[4,1,1,2]] code 52 to a code distance "5" (d = 5). The state prepared by the [[4,1,1,2]] code 52 is set to the upper left of the surface code 52a. The other physical qubits are initialized to "|0>" or "1+>". In the surface code 52a, shaded circles are physical qubits initialized to "10>", and double circles are physical qubits initialized to "|+>". As a result of the initialization, the state of the surface code 52a represents the ancilla state "$|m_\theta>_L$".

The quantum computing system 300 executes stabilizer measurement on this surface code 52a. The location of an error may be estimated based on information obtained by executing the stabilizer measurement. The quantum computing system 300 executes error detection based on the stabilizer measurement result. If an error is detected, the quantum computing system 300 discards the generated ancilla state and executes the ancilla state generation process again. This makes it possible to generate ancilla states with as few errors as possible.

If no error is detected in the surface code 52a representing the ancilla state, the ancilla state is used as the ancilla state of the phase rotation circuit 50.

The process of expanding the [[4,1,1,2]] code 52 to the surface code 52a may also be a cause of failure in generating the ancilla state. When the code distance of the surface code 52a is large, the probability that the generation of the ancilla state fails (injection failure probability) increases.

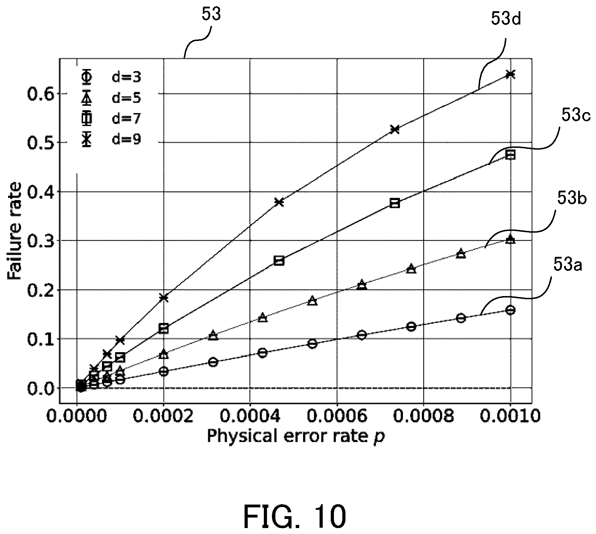

FIG. 10 is a diagram illustrating an example of the injection failure probability. A graph 53 indicates a relationship between the physical error rate and the injection failure probability in a case where the injection is executed with one [[4,1,1,2]] code and the result is expanded to a surface code having a predetermined code distance. The horizontal axis of the graph 53 represents the physical error rate p, and the vertical axis represents the injection failure probability.

A plurality of polygonal lines 53a to 53d indicated in the graph 53 represent a change in the injection failure probability with an increase in the physical error rate p. The polygonal line 53a indicates a case where the code distance is "3" (d = 3). The polygonal line 53b indicates a case where the code distance is "5" (d = 5). The polygonal line 53c indicates a case where the code distance is "7" (d = 7). The polygonal line 53d indicates a case where the code distance is "9" (d = 9).

As indicated by the polygonal lines 53a to 53d, the injection failure probability increases as the physical error rate increases. The injection failure probability is higher for a polygonal line corresponding to a larger code distance. When the injection failure probability is high, it takes time to supply the ancilla state, and as a result, the execution time of the phase rotation gate is prolonged.

Therefore, in the quantum computing system 300 according to the second embodiment, in the execution of a phase rotation gate using the RUS of the STAR architecture, the execution time is reduced by generating ancilla states in parallel.

In the quantum computing system 300, basic logic gates applied to logical qubits are executed by a method called lattice surgery. In lattice surgery, operation target logical qubits are handled in units called patches.

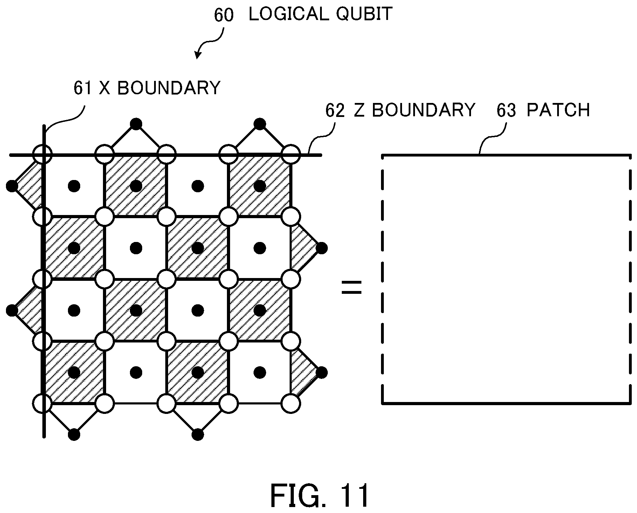

FIG. 11 is a diagram illustrating a relationship between a logical qubit and a patch. A logical qubit 60 is represented by a surface code having a predetermined code distance. In the rectangular area constituting the logical qubit 60, the left and right sides are X boundaries 61, and the upper and lower sides are Z boundaries. A plurality of physical qubits arranged on the X boundaries are logical X operators. A plurality of physical qubits arranged on the Z boundaries are logical Z operators.

One logical qubit 60 is represented by one patch 63. In the patch 63, the X individual boundary is represented by a broken line, and the individual Z boundary is represented by a solid line.

In lattice surgery, there are several basic operations, and various logic gates are executable by combining these basic operations.

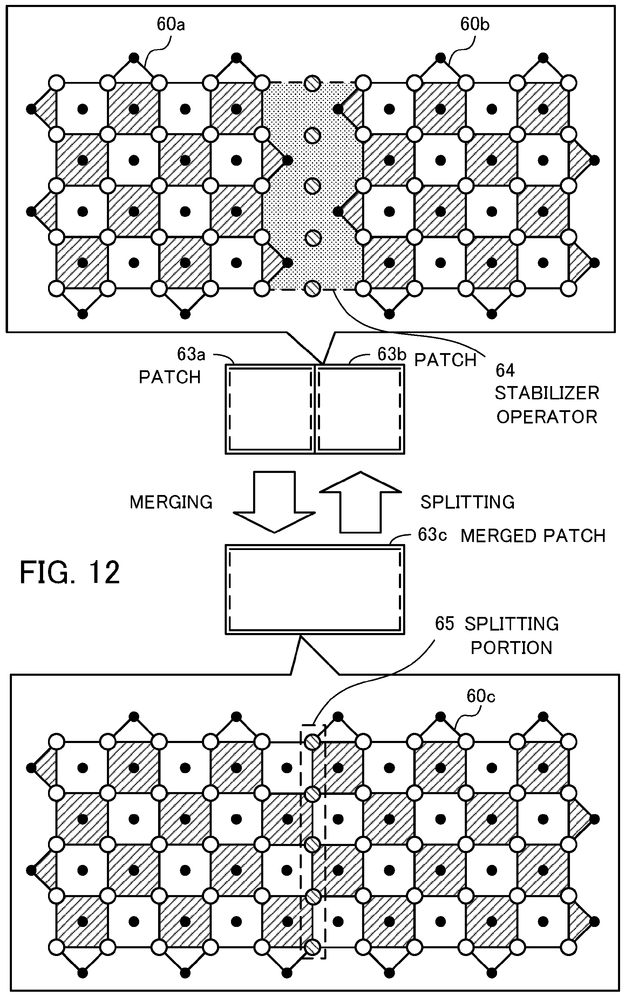

FIG. 12 is a diagram illustrating an example of merging and splitting, which are basic operations of lattice surgery. Merging is an operation of measuring a stabilizer operator 64 between two logical qubits 60a and 60b and forming one logical qubit 60c. The logic gate operation of merging is expressed by replacing the two patches 63a and 63b with one merged patch 63c.

Splitting is an operation of dividing the logical qubit 60c into two by measuring the states of the plurality of physical qubits arranged at a splitting portion 65 of the merged logical qubit 60c. The logic gate operation of splitting is expressed by replacing the merged patch 63c with the two patches 63a and 63b.

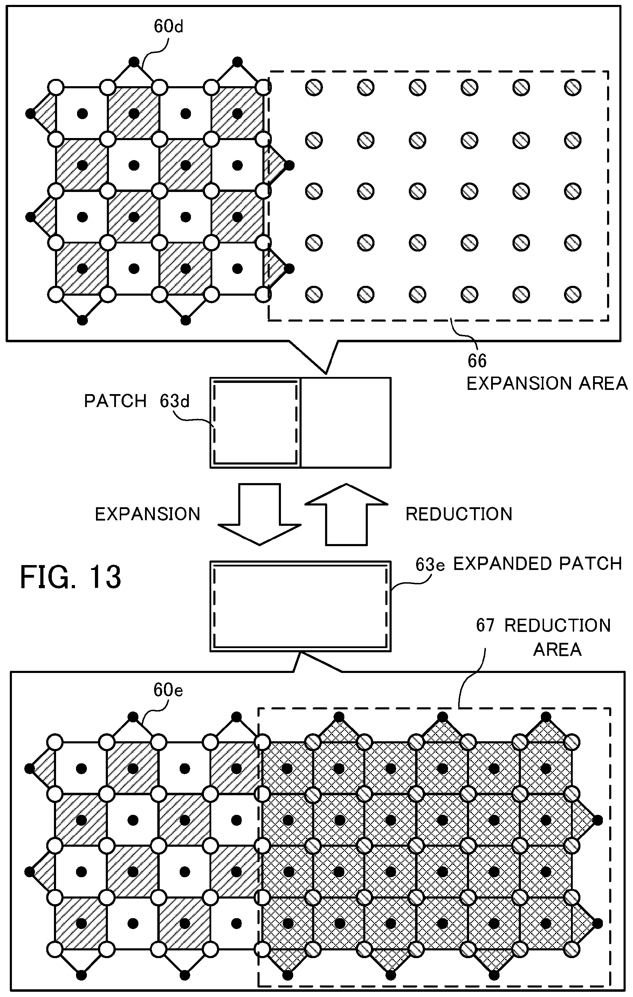

FIG. 13 is a diagram illustrating an example of deformation, which is a basic operation of lattice surgery. The logic gate operation of deformation is divided into expansion and reduction.

Expansion is an operation of initializing the physical qubits in an area (expansion area 66) in an expansion direction and measuring stabilizer operators in the expansion area 66. As a result, an expanded logical qubit 60e is generated. The expansion logic gate operation is represented by replacing a patch 63d with an expanded patch 63e including the expansion area 66.

Reduction is an operation of measuring the physical qubits in an area to be reduced (reduction area 67). As a result, for example, the expanded logical qubit 60e is reduced to a logical qubit 60d having its original size. The reduction logic gate operation is represented by replacing the expanded patch 63e with the patch 63d having a reduced size.

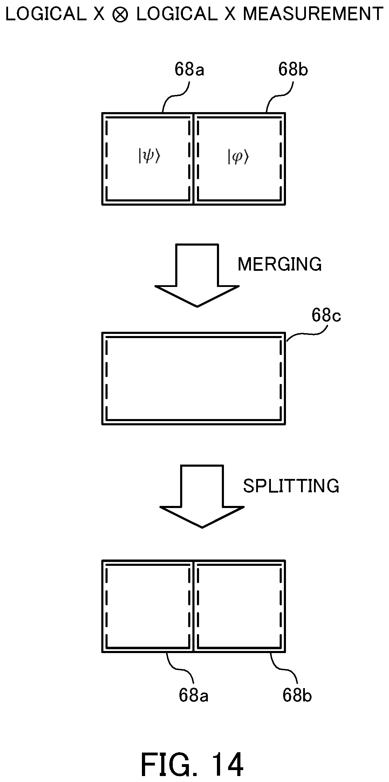

FIG. 14 is a diagram illustrating an example of logic gate operations by lattice surgery. For example, the gate operation of a logical X $\otimes$ logical X measurement is executable using basic logic gates. Hereinafter, the logical X $\otimes$ logical X measurement will be referred to as logical XX measurement.

First, the physical qubits between a patch 68a and a patch 68b are initialized to "|0>", and the patch 68a and the patch 68b are merged. The logic gate operation of merging generates a merged patch 68c. A logical XX measurement is carried out indirectly by means of an X-stabilizer measurement at the time of merging (the measured value is the product of the X-stabilizer measured values).

Since the merged patch 68c is one code as it is, the merged patch 68c is divided into the two patches 68a and 68b again by the logic gate operation of splitting. At this time, the result of the logical XX measurement is correctly obtained by applying an appropriate Pauli operator according to the measurement result of the physical qubits included in the splitting portion.

The state of the patch 68a before merging and splitting is set to "$|\psi>_L$", and the state of the patch 68b before merging and splitting is set to "$|\varphi>_L$". When the code distance is "3", the states of the patches 68a and 68b before merging and splitting are "$|\psi>_L|\varphi>_L|0>|0>|0>$". By the logical XX measurement, "$(1 + (-1)^M X_L \otimes X_L)|\psi>_L|\varphi>_L$" is obtained as the state of each of the patches 68a and 68b. M indicates a measurement result and is "0" or "1".

In this way, a logical XX measurement is implemented. A logical Z $\otimes$ logical Z measurement is similarly implementable by executing logic gate operations of merging and splitting between Z boundaries. Hereinafter, the logical Z $\otimes$ logical Z measurement will be referred to as logical ZZ measurement.

Assuming that the code distance is "3", in the case of the logical ZZ measurement, the states of the patches 68a and 68b before merging and splitting are "$|\psi>_L|\varphi>_L|+>|+>|+>$". By the logical ZZ measurement, "$(1 + (-1)^M Z_L \otimes Z_L) |\psi>_L|\varphi>_L$" is obtained as the state of each of the patches 68a and 68b.

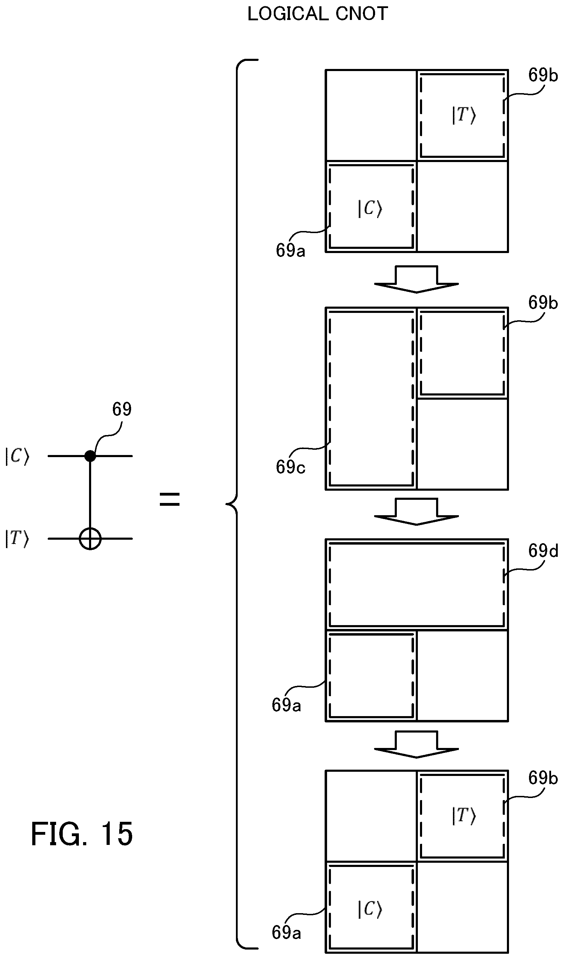

FIG. 15 is a diagram illustrating an example of a logical CNOT gate operation by lattice surgery. For example, a logical CNOT gate 69 using a logical qubit in a state "|C>" as a control qubit and a logical qubit in a state "|T>" as a target qubit is assumed.

The state of the control qubit is prepared in a patch 69a. The state of the target qubit is prepared in a patch 69b. First, the patch 69a is expanded to an expanded patch 69c using its upper side as an expansion area. After the expanded patch 69c is split, the expanded area and the patch 69b are merged to generate a merged patch 69d. When the merged patch 69d is split, the state of the patch 69b becomes equivalent to that obtained by application of the logical CNOT gate 69.

In the logical CNOT gate 69, an extra computation area (ancilla patch) other than the patches 69a and 69b corresponding to the operation target logical qubits is used.

The logical qubits used in the quantum computation are arranged appropriately within the qubit device 202.

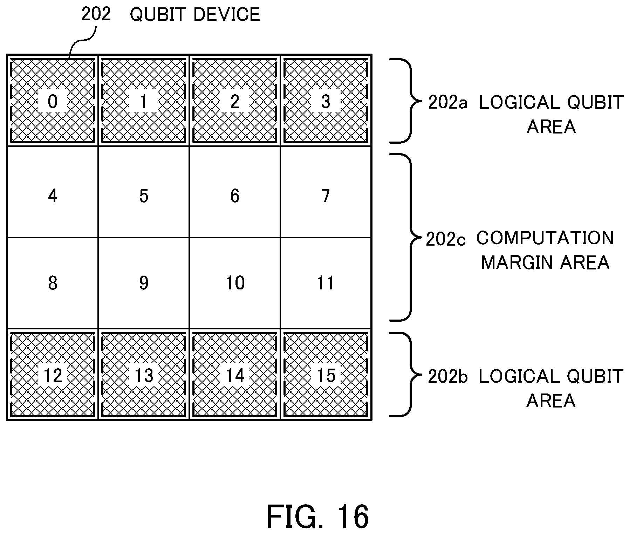

FIG. 16 is a diagram illustrating an example of an arrangement of logical qubits. For example, it is assumed that an area in which qubits are arranged in the qubit device 202 is divided into 16 patches. The 16 patches are numbered "0 to 15". Four patches of "0 to 3" in one horizontal row on the upper side are used as a logical qubit area 202a. Four patches of "12 to 15" in one horizontal row on the lower side are used as a logical qubit area 202b. Each patch between the logical qubit areas 202a and 202b is used as a logical qubit to be operated in quantum computation.

The area between the logical qubit areas 202a and 202b is a computation margin area 202c. The eight patches of "4 to 11" in the computation margin area 202c are used in gate operation computation processes on the logical qubits.

When the logic gate operation of a phase rotation gate is executed by the lattice surgery, an ancilla state is generated in a patch in the computation margin area 202c.

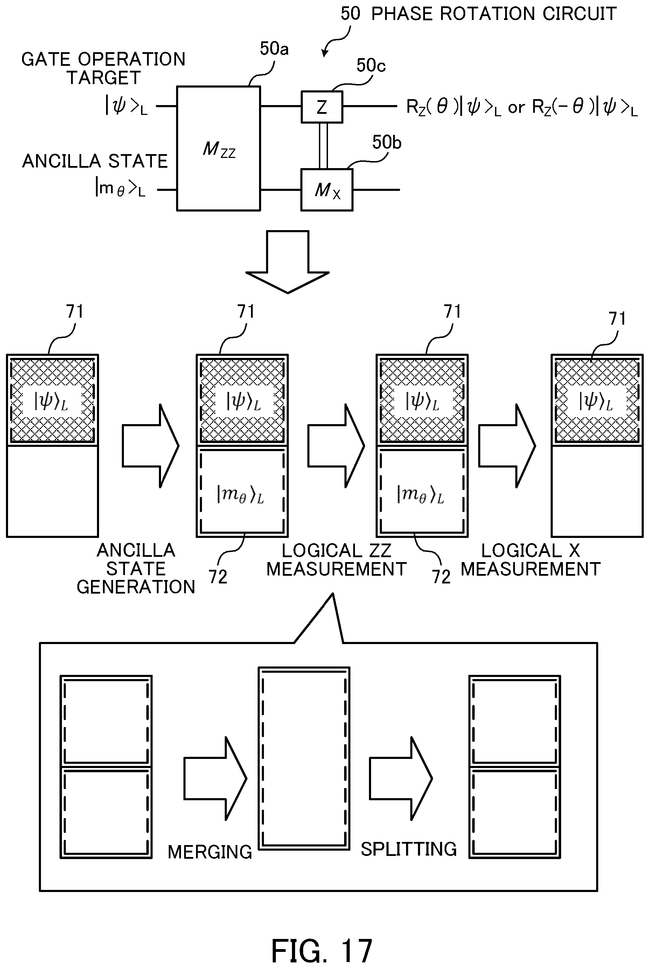

FIG. 17 is a diagram illustrating an example of a method of implementing a phase rotation gate by lattice surgery. The phase rotation gate is implemented by executing a gate operation of the phase rotation circuit 50 on a logical qubit as a gate operation target.

For example, when the logic gate operation of a phase rotation gate is executed on the state "$|\psi>_L$" generated using a patch 71 in the logical qubit area 202a or 202b, a patch 72 adjacent to the patch 71 is used as the ancilla patch, and the ancilla state is generated by the patch 72.

When the ancilla state is successfully generated, a logical ZZ measurement is executed between the patch 71 and the patch 72. In the logical ZZ measurement, logic gate operations of merging and splitting, which are basic operations of lattice surgery, are executed. Next, a logical X measurement is executed on the patch 72.

In the example in FIG. 17, an ancilla state is generated by one patch 72. In this case, if the generation of the ancilla state fails, the generation of the ancilla state is repeated in the patch 72. If the probability that generation of the ancilla state fails is high, the number of repetitions of the process of generating the ancilla state increases accordingly, and it takes time to complete the preparation (injection) of the ancilla state. Therefore, in the quantum computing system 300, the injection is executed in parallel using a plurality of patches.

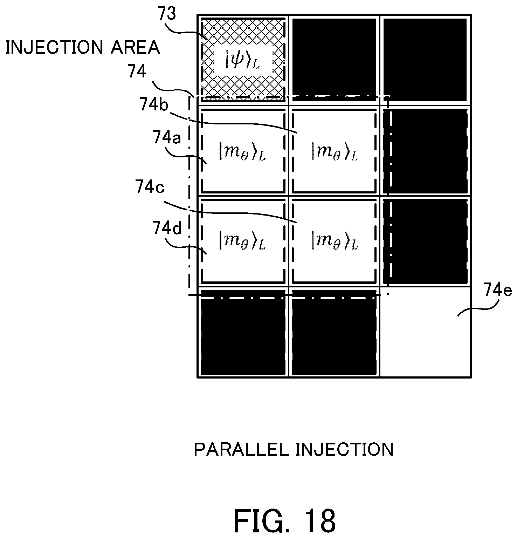

FIG. 18 is a diagram illustrating an example of parallel injection. For example, it is assumed that the logic gate operation of a phase rotation gate is executed on a logic qubit represented by a patch 73. In this case, patches satisfying predetermined conditions are detected in the computation margin area. For example, patches satisfying the following conditions are detected.

- Patch not being used.
- Patch having a positional relationship in which this patch is connectable to the target patch to which the phase rotation gate is applied.

In the example in FIG. 18, the black patches are being used. There are five patches 74a-74e that are not being used. If a patch not being used is reachable from the patch 74a adjacent to the patch 73 by vertically or horizontally tracing only a patch or patches not being used, this patch is determined to have a positional relationship in which this patch is connectable to the target patch 73 to which the phase rotation gate is applied.

The patches 74a to 74d satisfy these predetermined conditions. Therefore, the patches 74a to 74d are detected as the injection area 74. Although the patch 74e is not being used, the patch 74e is not detected because the patch 74e is not in the positional relationship in which the patch 74e is connectable to the patch 73.

In the quantum computing system 300, the injection is executed in parallel using each of the patches 74a to 74d in the injection area 74. In the example in FIG. 18, four injections are executed in parallel.

When an ancilla state is successfully generated in at least one of the injections executed in parallel, a logical ZZ measurement using this ancilla state is executed. During the logical ZZ measurement, a patch not allocated to and not used by the operation of the phase rotation gate may be used for pre-injection, for example. The pre-injection is a process of executing the injection for the next phase rotation in advance on the assumption that the RUS fails (reverse rotation occurs).

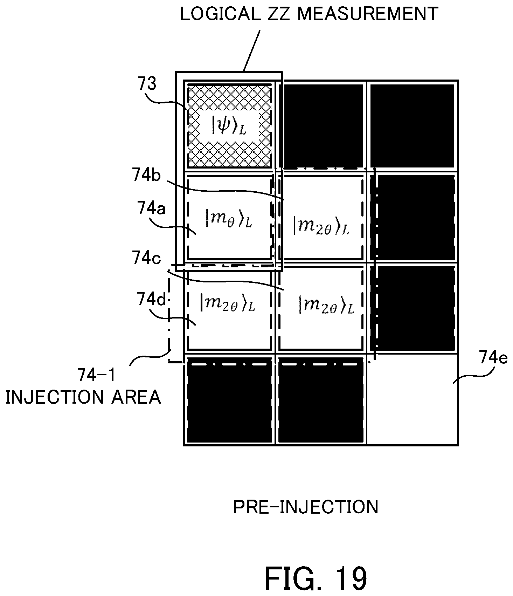

FIG. 19 is a diagram illustrating an example of the pre-injection. For example, it is assumed that the logical ZZ measurement is being executed between the patch 73 and the patch 74a. During the measurement, in preparation for a case where the RUS fails, the injection for the ancilla state of the next rotation angle "$2\theta$" is executed in advance using an injection area 74-1, which is not being used. In the example in FIG. 19, since the three patches 74b to 74d are available, the injection for generating the ancilla state "$|m_{2\theta}>_L$" is executed in three parallel.

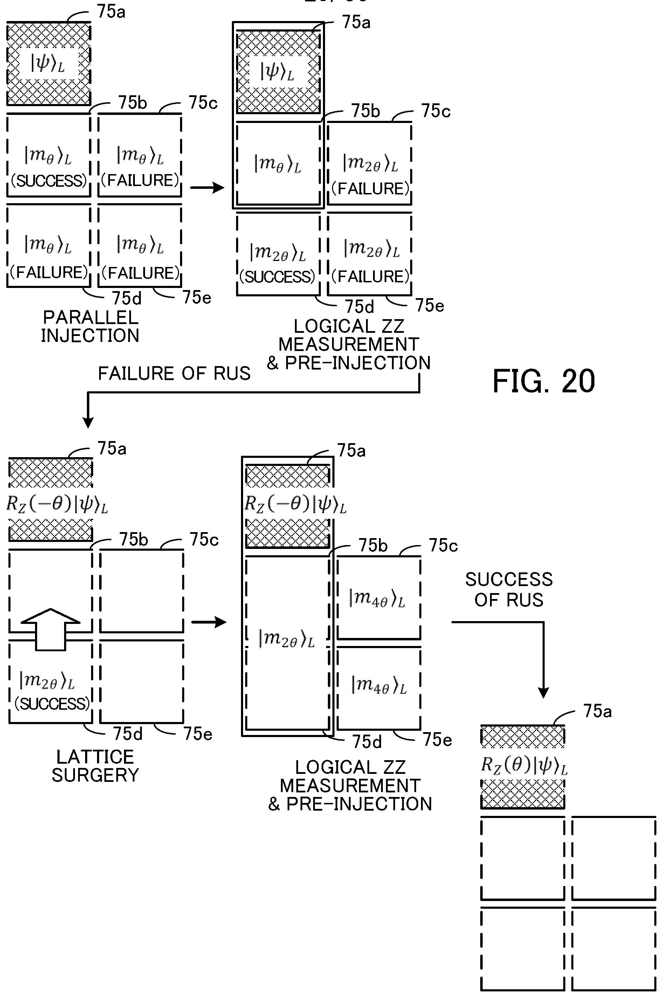

FIG. 20 is a diagram illustrating an example of the execution process of a phase rotation gate with the parallel injection the and pre-injection. For example, in a patch 75a, a state of an operation target logical qubit is prepared. At this point in time, four patches 75b to 75e are not being used, and the patches 75b to 75e are included in the injection area.

In this case, four parallel injections are executed using the patches 75b to 75e. In the example in FIG. 20, the injection is successful only in the patch 75b. Therefore, the logical ZZ measurement using the patch 75a and the patch 75b and the pre-injection using the other available patches 75c to 75e are executed. Here, it is assumed that the RUS using the logical ZZ measurement fails (reverse rotation). Further, it is assumed that the pre-injection is successful only in the patch 75d. In this case, the state "$m_{2\theta}>_L$" of the patch 75d is expanded in the direction of the patch 75b by a basic operation of the lattice surgery.

Next, the logical ZZ measurement using the state "$m_{2\theta}>_L$" of the expanded patch (area including the patch 75b and the patch 75d) and the pre-injection using the other available patches 75c and 75e are executed. Here, it is assumed that the RUS using the logical ZZ measurement is successful (forward rotation). As a result, the state of the logical qubit represented by the patch 75a becomes "$R_Z(\theta)|\psi>_L$".

While the parallel injection and the pre-injection are being repeated, the computation in an area being used may end, and the area may be released. If a released patch satisfies the conditions for the injection area, the patch may be added to the injection area. In addition, since the new area has been added to the injection area, it is possible to add a patch having newly been connected to the operation target patch to the injection area.

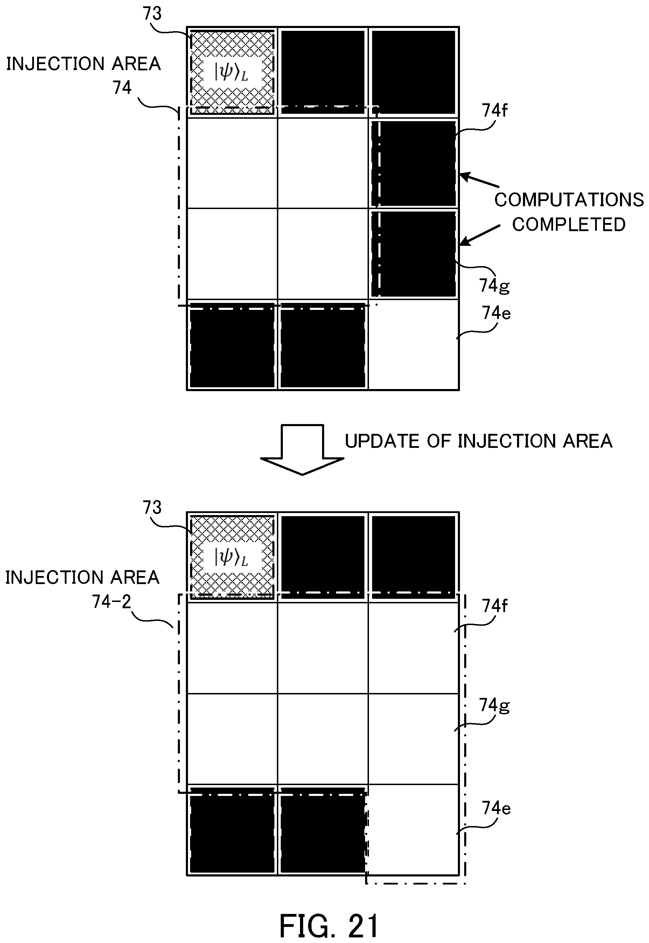

FIG. 21 is a diagram illustrating an example of a realtime update process of an injection area. For example, in the initial stage, the patch 74e is not connected to the operation target patch 73 via a patch not being used. Therefore, the patch 74e is not included in the injection area 74.

Next, it is assumed that the computation executed using patches 74f and 74g is completed while the logical ZZ measurement or the like is being executed. The patches 74f and 74g have a positional relationship in which the patches 74f and 74g are connectable to the target patch. In addition, the patch 74e also has a positional relationship in which the patch 74e is connectable to the target patch. As a result, the injection area 74 is expanded to an injection area 74-2 including the patches 74e to 74g.

In the quantum computation, in order to shorten the computation time, a plurality of gate operations having no dependency relationship are executable in parallel. Therefore, the logic gate operations of a plurality of phase rotation gates may be executed in parallel. When executing a plurality of phase rotation gates in parallel, it is important to evenly allocate unused areas to the plurality of phase rotation gate operations.

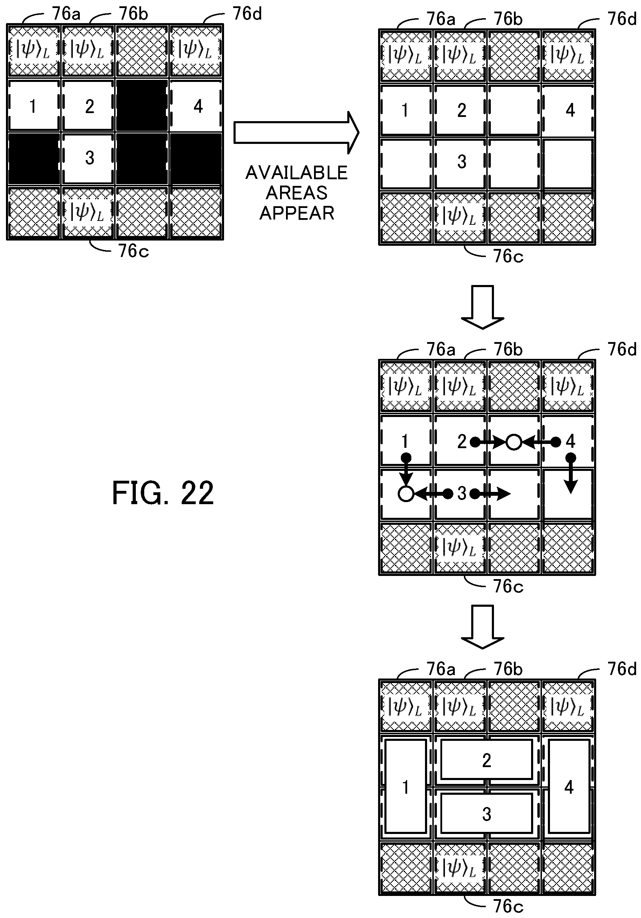

FIG. 22 is a diagram illustrating an example of an available area allocation method. For example, it is assumed that four patches 76a to 76d are the operation targets of phase rotation gates. Patches adjacent to their respective patches 76a to 76d are allocated as injection areas. The injection area of the patch 76a will be referred to as "area 1", the injection area of the patch 76b will be referred to as "area 2", the injection area of the patch 76c will be referred to as "area 3", and the injection area of the patch 76d will be referred to as "area 4". In FIG. 22, the black areas are being used for computation.

Here, it is assumed that the computations in the used areas have been completed, and these areas have consequently changed to available areas. Available areas of four patches have been generated. First, each injection area is expanded by one patch into an adjacent available area. In FIG. 22, the patch of the individual expansion destination is indicated by an arrow.

At this point in time, if there is a patch that is reachable from a plurality of injection areas at the same time, it is determined that a collision has occurred in that patch. In FIG. 22, a patch in which a collision has occurred is indicated by a white circle.

If no collision occurs in the expansion destination patch, each injection area is further expanded by one patch to an adjacent available area. This operation is repeated until there is no adjacent available area.

A patch in which no collision has occurred is included in an injection area expanded to the patch. For a patch in which a collision has occurred, the sizes of the colliding injection areas are compared, and the patch is included in the smaller injection area.

For example, a patch in which "area 1" and "area 3" collide with each other is examined. The "area 1" has a size of one patch, and the "area 3" has a size of two patches. Comparing the sizes of the "area 1" and the "area 3", the "area 1" is smaller. Therefore, the patch in which the collision has occurred is included in the "area 1".

A patch in which the "area 2" and the "area 4" collide with each other will be examined. The "area 2" has a size of one patch, and the "area 4" has a size of two patches. Comparing the sizes of the "area 2" and the "area 4", the "area 2" is smaller. Therefore, the patch in which the collision has occurred is included in the "area 2".

Finally, the size of each injection area becomes the size of two patches. As a result, the injection areas used in the plurality of phase rotation gates executed in parallel are evenly allocated to the plurality of phase rotation gates.

When the parallel injection or the pre-injection is executed, the injection may succeed in a plurality of patches. In this case, one patch is selected from the patches for which the injection has succeeded, and is connected to the operation target patch.

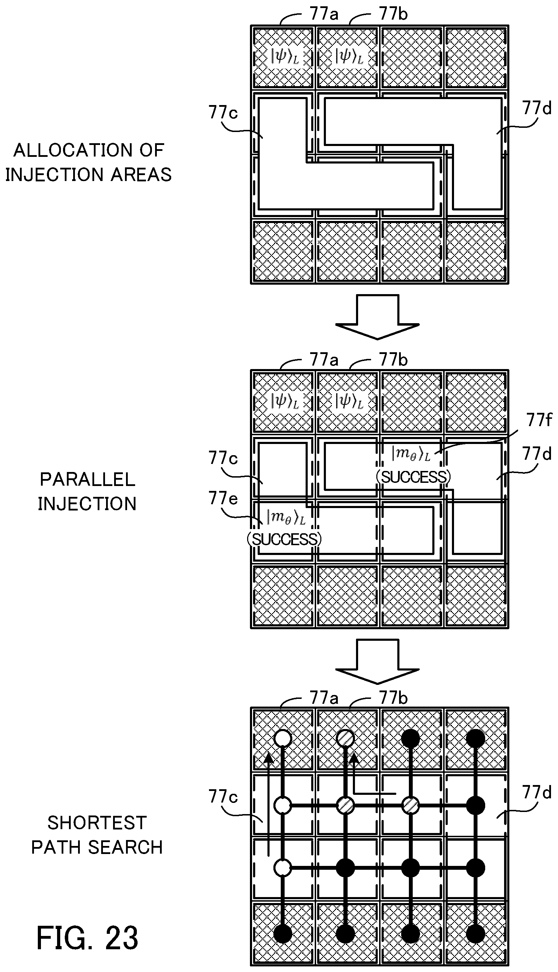

FIG. 23 is a diagram illustrating an example of connection between patches for which the injection has succeeded and operation target patches. For example, it is assumed that two patches 77a and 77b are the operation targets of phase rotation gates. An injection area 77c is allocated to the phase rotation gate operation on the logical qubit represented by the patch 77a. An injection area 77d is allocated to the phase rotation gate operation on the logical qubit represented by the patch 77b.

Each of the injection areas 77c and 77d includes four patches. The parallel injection is executed by the patches in the injection areas 77c and 77d. In the example in FIG. 23, the injection is successful in a patch 77e in the injection area 77c.

The injection is successful in a patch 77f in the injection area 77d.

In the example in FIG. 23, the injection succeeds in one patch 77e and one patch 77f in their respective injection areas 77c and 77d. However, the injection may succeed in a plurality of patches in one injection area. In this case, a patch closest to the operation target patch is connected to the operation target patch, using the shortest path search.

The path search between an operation target patch and a patch for which the injection has succeeded may be executed by, for example, an A* algorithm. The A* algorithm is an improved version of Dijkstra's algorithm. The A* algorithm is able to find the shortest distance more efficiently if the distance to the end point is estimable.

Among the patches for which the injection has succeeded, the patch closest to the operation target patch is connected to the operation target patch by the shortest path, and the logical ZZ measurement is executed. In this case, a patch on the connection path is used as an ancilla patch.

In the example in FIG. 23, the operation target patch 77a and the patch 77e for which the injection has succeeded in the injection area 77c are connected, and the logical ZZ measurement is executed. Further, the operation target patch 77b and the patch 77f in the injection area 77d are connected, and the logical ZZ measurement is executed. By connecting the operation target patch and a patch by the shortest path, the number of ancilla patches used is minimized. Thus, it is possible to use more patches in the next pre-injection.

Next, quantum computation functions of the quantum computing system 300 for efficiently executing phase rotation in the STAR architecture will be described.

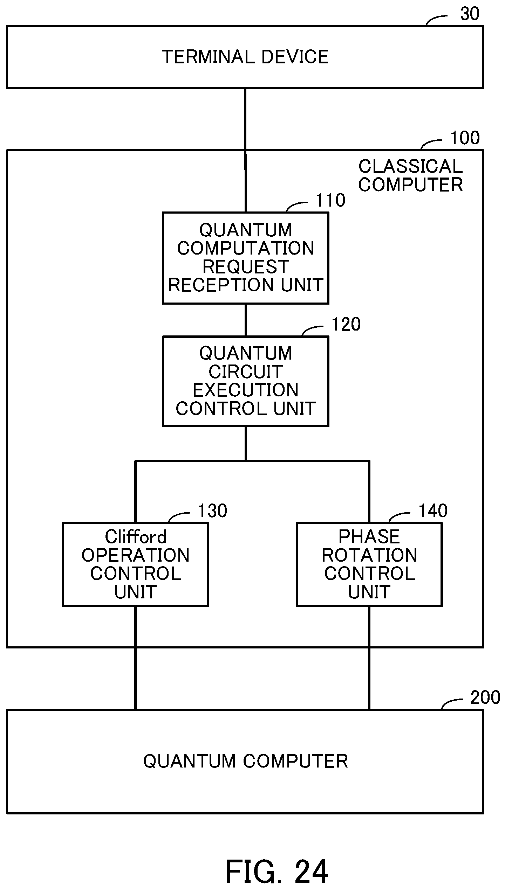

FIG. 24 is a block diagram illustrating an example of functions for quantum computation in the quantum computation system. The classical computer 100 includes a quantum computation request reception unit 110, a quantum circuit execution control unit 120, a Clifford operation control unit 130, and a phase rotation control unit 140.

The quantum computation request reception unit 110 receives a quantum computation request from the terminal device 30. The quantum computation request includes, for example, a quantum circuit corresponding to a problem to be solved. The quantum computation request reception unit 110 transmits, to the quantum circuit execution control unit 120, an execution instruction for the quantum circuit corresponding to the problem to be solved indicated by the quantum computation request. When the quantum computation request reception unit 110 acquires the result of the quantum computation based on the quantum circuit from the quantum circuit execution control unit 120, the quantum computation request reception unit 110 transmits the computation result to the terminal device 30.

Based on the quantum circuit corresponding to the problem to be solved, the quantum circuit execution control unit 120 transmits the execution instructions of the quantum gates to the Clifford operation control unit 130 or the phase rotation control unit 140 in the order indicated by the quantum circuit acquired as the execution target. When the quantum circuit execution control unit 120 acquires the measurement result indicating a qubit state after the gate operations based on the quantum circuit from the Clifford operation control unit 130, the quantum circuit execution control unit 120 computes the solution of the problem to be solved based on the measurement result. Then, the quantum circuit execution control unit 120 transmits the solution to the problem to be solved to the quantum computation request reception unit 110 as the result of the quantum computation.

The quantum circuit execution control unit 120 manages patches being used for computation and patches in an available state in the qubit device 202. For example, the quantum circuit execution control unit 120 sets a patch allocated for a quantum gate operation of the computation target quantum circuit to "being used". The quantum circuit execution control unit 120 changes the state of a patch allocated to a quantum gate operation for which the computation has been completed to "available state".

The Clifford operation control unit 130 instructs the quantum computer 200 to execute a Clifford operation or a measurement operation on a logical qubit. The quantum computer 200 executes the Clifford gate operation or measurement in accordance with an instruction from the Clifford operation control unit 130. Then, information indicating the completion of the gate operation or the measurement result is transmitted from the quantum computer 200 to the Clifford operation control unit 130. When the gate operation is completed, the Clifford operation control unit 130 transmits information indicating the completion to the quantum circuit execution control unit 120. When receiving the measurement result, the Clifford operation control unit 130 transmits the received measurement result to the quantum circuit execution control unit 120.

The phase rotation control unit 140 instructs the quantum computer 200 to execute a series of operations for realizing phase rotation on a logical qubit. The quantum computer 200 executes the phase rotation gate operation in accordance with an instruction from the phase rotation control unit 140. Then, information indicating the completion of the gate operation is transmitted from the quantum computer 200 to the phase rotation control unit 140.

During the phase rotation gate operation, error detection is executed. The quantum computer 200 transmits the result of the error detection to the phase rotation control unit 140. Based on the error detection result, the phase rotation control unit 140 determines subsequent instructions to the quantum computer 200 (for example, the next rotation angle and the location of a patch on which the injection is executed), and instructs the quantum computer 200 to execute a gate operation.

When the phase rotation gate operation is completed, the phase rotation control unit 140 transmits information indicating the completion of the phase rotation to the quantum circuit execution control unit 120.

The function of an individual element illustrated in FIG. 24 may be implemented by instructing the processor 101 to execute a program module corresponding to this element, for example.

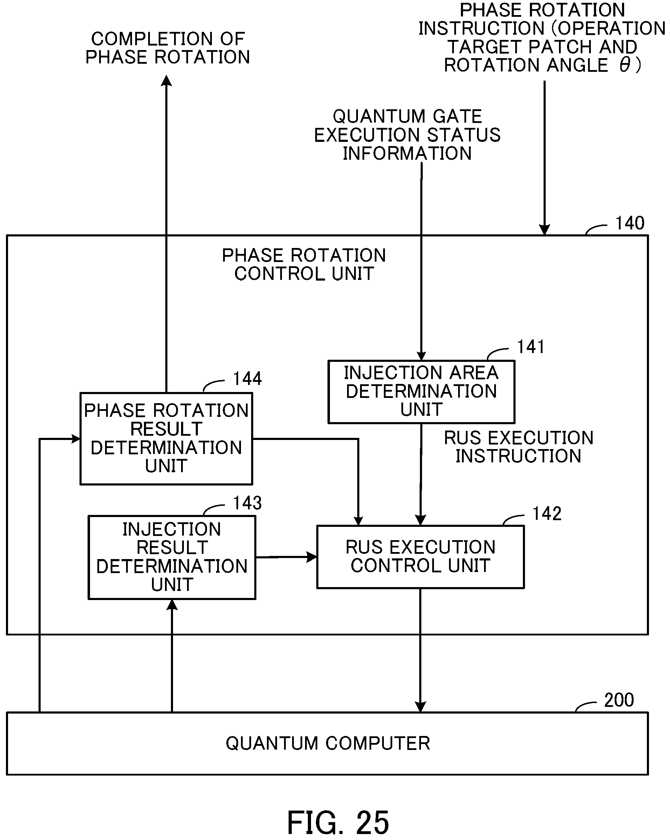

FIG. 25 is a diagram illustrating an example of functions of the phase rotation control unit. Upon receiving a phase rotation instruction from the quantum circuit execution control unit 120, the phase rotation control unit 140 controls the quantum computer 200 to instruct the quantum computer 200 to execute the logic gate operation of a phase rotation gate. The phase rotation instruction indicates the operation target patch of the phase rotation and a rotation angle.

In order to instruct the quantum computer 200 to execute the phase rotation, the phase rotation control unit 140 includes an injection area determination unit 141, an RUS execution control unit 142, an injection result determination unit 143, and a phase rotation result determination unit 144.

The injection area determination unit 141 acquires quantum gate execution status information from the quantum circuit execution control unit 120, and allocates an injection area to the logic gate operation of a phase rotation gate on an operation target patch. After allocating the injection area, the injection area determination unit 141 transmits an RUS execution instruction to the RUS execution control unit 142. The RUS execution instruction includes information indicating the allocated injection area. The RUS execution instruction is an instruction to execute the parallel injection or logical ZZ measurement & pre-injection using the allocated injection area.

The RUS execution control unit 142 controls the quantum computer 200 such that the logic gate operation of the phase rotation gate is applied to the operation target patch in response to the RUS execution instruction. For example, the RUS execution control unit 142 executes phase rotation execution control in the STAR architecture.

The RUS execution control unit 142 instructs the quantum computer 200 to execute the parallel injection in the injection area. The RUS execution control unit 142 acquires information indicating a patch for which the injection has succeeded from the injection result determination unit 143, and controls the quantum computer 200 to connect the patch to the operation target patch. Then, the RUS execution control unit 142 instructs the quantum computer 200 to execute the logical ZZ measurement and the pre-injection.

The RUS execution control unit 142 acquires the result of the phase rotation of the patch on which the logical ZZ measurement has been executed from the phase rotation result determination unit 144. If the phase rotation fails, the RUS execution control unit 142 acquires information indicating a patch for which the pre-injection has succeeded from the injection result determination unit 143, and controls the quantum computer 200 to connect the patch to the operation target patch. Then, the RUS execution control unit 142 instructs the quantum computer 200 to execute the logical ZZ measurement and the pre-injection again.

The injection result determination unit 143 acquires an error detection circuit execution result for each patch for which the injection has been executed. The injection result determination unit 143 determines the success or failure of the individual injection based on a value indicated by a corresponding error detection circuit execution result, and transmits the determination result to the RUS execution control unit 142.

The phase rotation result determination unit 144 determines the result of the phase rotation of the individual logical qubit indicated by the operation target patch based on the measurement result obtained when the quantum computer 200 executes the phase rotation circuit. For example, if the result of the logical ZZ measurement is "+1", the phase rotation result determination unit 144 determines that the phase rotation has succeeded (rotation in the target direction), and if the result of the logical ZZ measurement is "-1", the phase rotation result determination unit 144 determines that the phase rotation has failed (rotation in the direction opposite to the target direction). If the phase has been rotated in the target direction, the phase rotation result determination unit 144 transmits information indicating the completion of the phase rotation to the quantum circuit execution control unit 120. If the rotation has been executed in the reverse direction, the phase rotation result determination unit 144 transmits information indicating a phase rotation failure to the RUS execution control unit 142.

Next, functions of the injection area determination unit 141 will be described in detail.

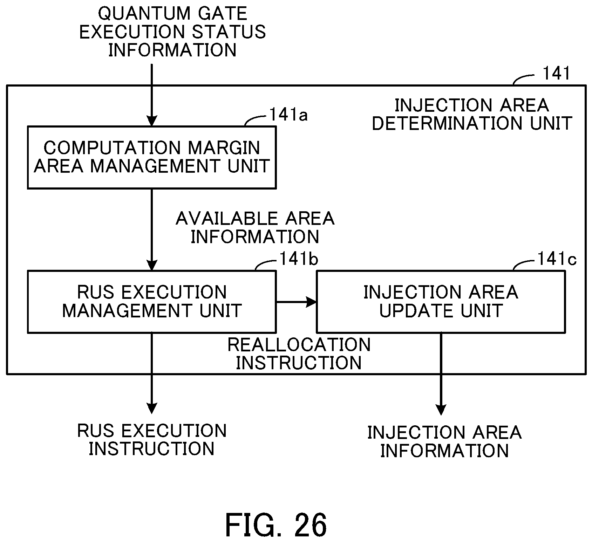

FIG. 26 is a diagram illustrating an example of functions of the injection area determination unit. The injection area determination unit 141 includes a computation margin area management unit 141a, a RUS execution management unit 141b, and an injection area update unit 141c.

The computation margin area management unit 141a manages whether a patch in the computation margin area is being used based on the quantum gate execution status information. The computation margin area management unit 141a transmits available area information indicating an available area in the computation margin area to the RUS execution management unit 141b.

The RUS execution management unit 141b determines an injection area corresponding to the logic gate operation of a phase rotation gate on an operation target patch based on the available area information. Then, the RUS execution management unit 141b transmits a RUS execution instruction specifying the injection area to the RUS execution control unit 142.

If the available area information is updated before the phase rotation is completed, the RUS execution management unit 141b transmits a reallocation instruction for instructing reallocation of the injection area to the injection area update unit 141c.

The injection area update unit 141c updates the injection area based on the updated available area information. The injection area update unit 141c transmits injection area information indicating the updated injection area to the RUS execution control unit 142.

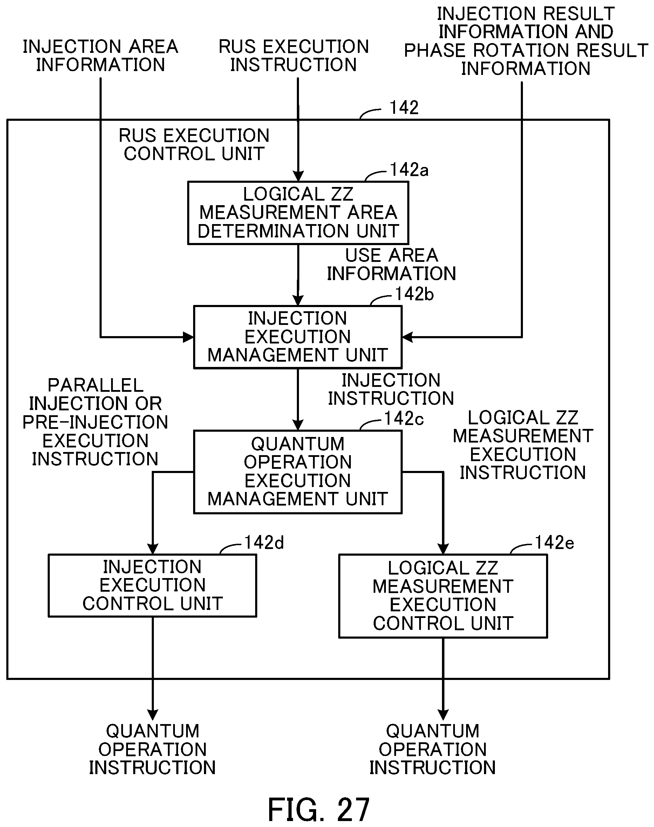

FIG. 27 is a diagram illustrating an example of functions of the RUS execution control unit. The RUS execution control unit 142 includes a logical ZZ measurement area determination unit 142a, an injection execution management unit 142b, a quantum operation execution management unit 142c, an injection execution control unit 142d, and a logical ZZ measurement execution control unit 142e.

The logical ZZ measurement area determination unit 142a specifies a logical ZZ measurement target area in response to a RUS execution instruction. For example, the logical ZZ measurement area determination unit 142a determines an operation target patch of phase rotation and a patch (ancilla patch) in a computation margin area adjacent to the patch as a logical ZZ measurement target area. The logical ZZ measurement area determination unit 142a transmits use area information indicating the logical ZZ measurement target area to the injection execution management unit 142b.

The injection execution management unit 142b manages patches on which the injection is executed and a rotation angle. For example, in the first injection, the injection execution management unit 142b sets all patches in the injection area as injection targets. In the first injection, the injection execution management unit 142b sets the rotation angle specified by the phase rotation gate as the rotation angle in the injection.

After the injection succeeds in any patch, the injection execution management unit 142b sets the patches in the injection area, the patches being other than the patch used for the logical ZZ measurement, as the injection targets in the pre-injection. In this case, the injection execution management unit 142b sets the injection angle to twice the previous injection angle. The injection execution management unit 142b transmits, to the quantum operation execution management unit 142c, an injection instruction indicating an injection target patch and a rotation angle of the injection. The injection instruction is an instruction to execute the parallel injection or an instruction to execute the pre-injection & logical ZZ measurement.

The quantum operation execution management unit 142c manages execution of quantum operations for RUS. For example, if the quantum operation execution management unit 142c receives an injection instruction instructing execution of the parallel injection, the quantum operation execution management unit 142c transmits a parallel injection execution instruction specifying patches to be used for the injection to the injection execution control unit 142d. When the quantum operation execution management unit 142c receives an execution instruction for the pre-injection and logical ZZ measurement, the quantum operation execution management unit 142c transmits a pre-injection execution instruction to the injection execution control unit 142d. The quantum operation execution management unit 142c transmits a logical ZZ measurement execution instruction to the logical ZZ measurement execution control unit 142e.

The injection execution control unit 142d transmits, to the quantum computer 200, a quantum operation instruction specifying a parallel injection or pre-injection target patch, so as to execute the injection. The injection execution control unit 142d transmits, to the quantum computer 200, quantum operation instructions for executing the ancilla state generation circuit 51 with the [[4,1,1,2]] code 52 and executing the error detection circuit for the [[4,1,1,4]] code 52, for example. The injection execution control unit 142d transmits, to the quantum computer 200, a quantum operation instruction for an operation of expanding the [[4,1,1,2]] code 52 for which the ancilla state has been generated to the surface code. The injection execution control unit 142d transmits a quantum operation instruction for executing the error detection circuit on a surface code to the quantum computer 200.

The logical ZZ measurement execution control unit 142e transmits, to the quantum computer 200, quantum operation instructions for executing the connection between a patch for which the injection has succeeded and the operation target patch of the phase rotation, the logical ZZ measurement, and the logical X measurement.

Next, a quantum computation support process of the classical computer 100 executed when a quantum circuit including a phase rotation gate is executed will be described in detail.

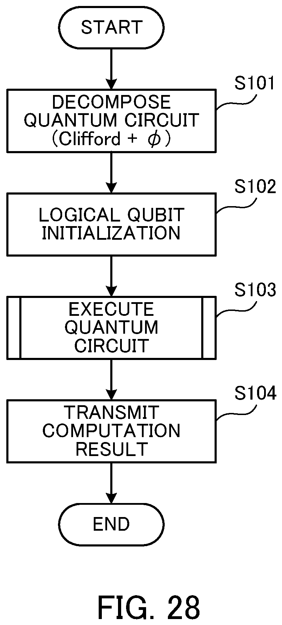

FIG. 28 is a flowchart illustrating an example of a procedure of a quantum computation support process in the classical computer. Hereinafter, the process illustrated in FIG. 28 will be described in order of step numbers.

[Step S101] When the quantum computation request reception unit 110 acquires a quantum computation request from the terminal device 30, the quantum computation request reception unit 110 decomposes a quantum gate (for example, a 3-qubit gate) in a quantum circuit to be computed, to convert the quantum gate into a quantum circuit in which quantum gates of "Clifford + $\varphi$ (phase rotation)" are combined.

(Step S102) The quantum circuit execution control unit 120 executes a logical qubit initialization process. For example, the quantum circuit execution control unit 120 determines physical qubits to be used for execution of the quantum circuit and transmits an instruction for initialization on the physical qubits to the quantum computer 200. The quantum computer 200 initializes the state of the individual physical qubit to a predetermined state in accordance with the initialization instruction.

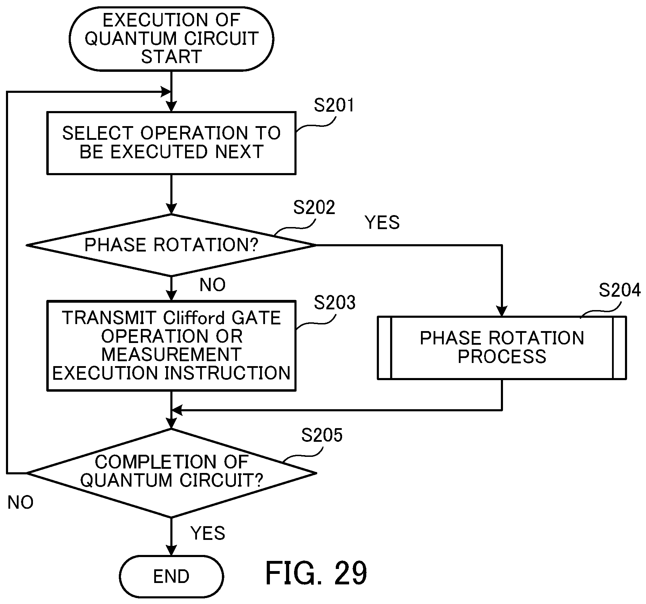

[Step S103] The quantum circuit execution control unit 120 executes a quantum circuit execution process upon receiving a response indicating completion of the initialization from the quantum computer 200. Details of the quantum circuit execution process will be described later (see FIG. 29).

[Step S104] When the execution of the quantum circuit is completed and the measurement result of the final state of the logical qubit is acquired, the quantum circuit execution control unit 120 computes the solution of the problem to be solved based on the measurement result. Next, the quantum circuit execution control unit 120 transmits the computation result to the quantum computation request reception unit 110. The quantum computation request reception unit 110 transmits the computation result to the terminal device 30.

In this way, quantum computation using a quantum circuit is executed. Next, the quantum circuit execution process will be described in detail.

FIG. 29 is a flowchart illustrating an example of a procedure of the quantum circuit execution process. Hereinafter, the process illustrated in FIG. 29 will be described in order of step numbers.

[Step S201] The quantum circuit execution control unit 120 selects an operation to be executed next (gate operation or measurement) from the quantum circuit.

[Step S202] The quantum circuit execution control unit 120 determines whether the selected operation is the quantum gate operation of a phase rotation. If the selected operation is the gate operation of a Clifford gate or measurement, the quantum circuit execution control unit 120 advances the process to step S203. If the selected operation is a phase rotation quantum gate, the quantum circuit execution control unit 120 advances the process to step S204.

[Step S203] The quantum circuit execution control unit 120 transmits, to the Clifford operation control unit 130, an instruction for execution of the gate operation of the Clifford gate or the measurement to be executed next. If the transmitted instruction is the gate operation execution instruction of the Clifford gate, the Clifford operation control unit 130 transmits the quantum operation instruction of the gate operation of the Clifford gate on the logical qubit to the quantum computer 200. If the transmitted instruction is a measurement execution instruction, the Clifford operation control unit 130 transmits a quantum operation instruction for measuring the state of the logical qubit to the quantum computer 200. Upon acquiring a measurement result from the quantum computer 200, the Clifford operation control unit 130 transmits the measurement result to the quantum circuit execution control unit 120. Thereafter, the quantum circuit execution control unit 120 advances the process to step S205.

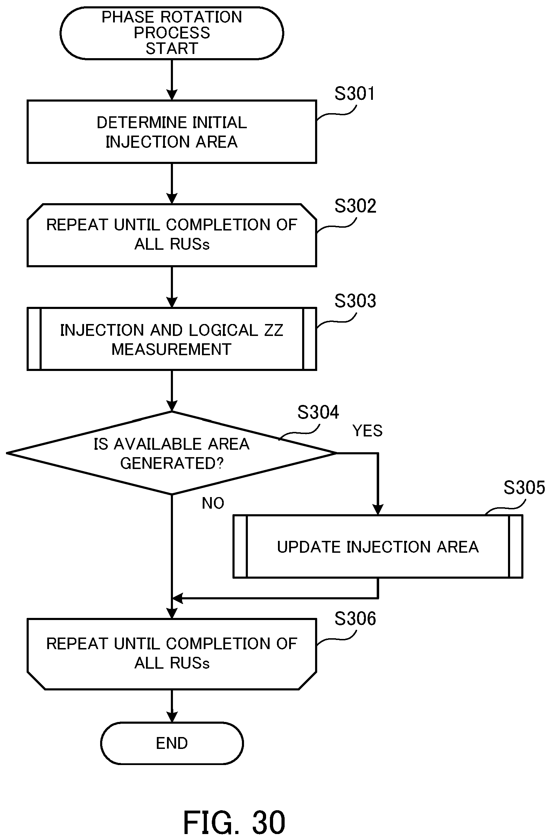

[Step S204] The phase rotation control unit 140 executes a phase rotation process. Details of the phase rotation process will be described later (see FIG. 30).

(Step S205) The quantum circuit execution control unit 120 determines whether the last operation of the quantum circuit has been completed. If the last operation of the quantum circuit is completed, the quantum circuit execution control unit 120 ends the quantum circuit execution process. If there is an unprocessed operation, the quantum circuit execution control unit 120 advances the process to step S201.

Next, the phase rotation process will be described in detail.

FIG. 30 is a flowchart illustrating an example of a procedure of the phase rotation process. Hereinafter, the process illustrated in FIG. 30 will be described in order of step numbers.

[Step S301] Upon acquiring the phase rotation instruction, the phase rotation control unit 140 first determines an initial injection area. For example, the injection area determination unit 141 in the phase rotation control unit 140 determines available patches in the computation margin area 202c, the patches being connectable to the operation target patch. The injection area determination unit 141 sets an area including the determined patches as an initial injection area.

In addition, when a plurality of phase rotations are simultaneously executed, the injection area determination unit 141 executes allocation of injection areas such that injection areas having approximately the same size are allocated to the logic gate operations of the plurality of phase rotation gates.

[Step S302] The phase rotation control unit 140 repeats steps S303 to S305 until RUS is completed for all the phase rotations. The logic gate operations of the phase rotation gates may be executed in parallel in steps S303 to S305.

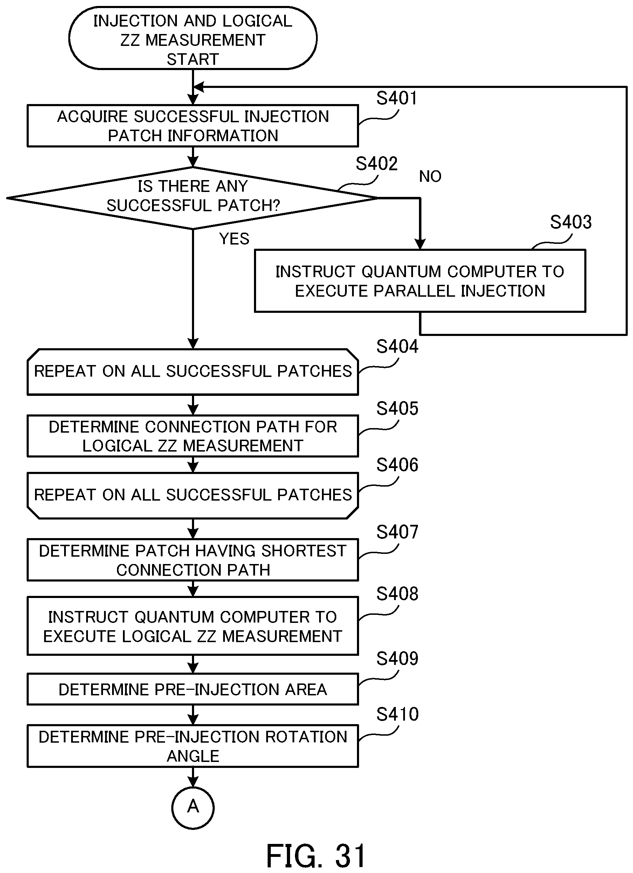

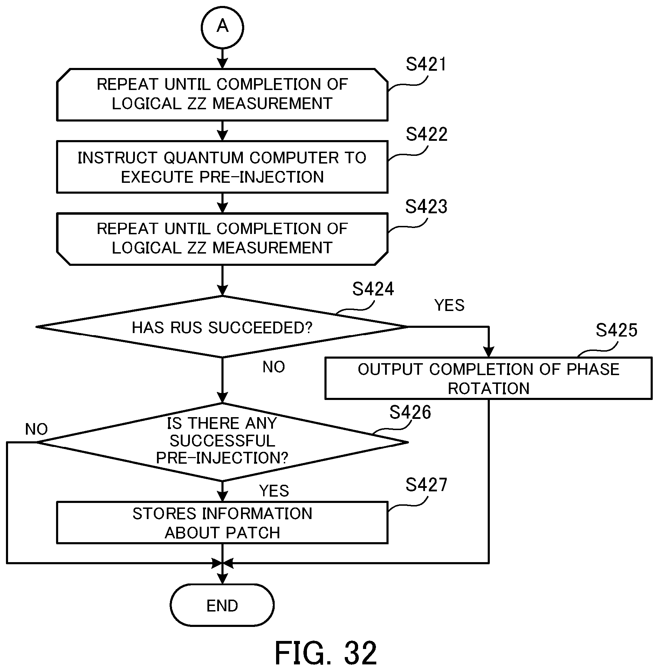

[Step S303] The phase rotation control unit 140 executes an injection and logical ZZ measurement process. Details of the injection and logical ZZ measurement process will be described later (see FIGS. 31 and 32).

[Step S304] The phase rotation control unit 140 determines whether an available area is generated. For example, when there is a completed quantum computation in the quantum gate execution status, the injection area determination unit 141 in the phase rotation control unit 140 determines that a patch used in the quantum computation has become an available area. When an available area is generated, the phase rotation control unit 140 advances the process to step S305. If no available area is generated, the phase rotation control unit 140 advances the process to step S306.

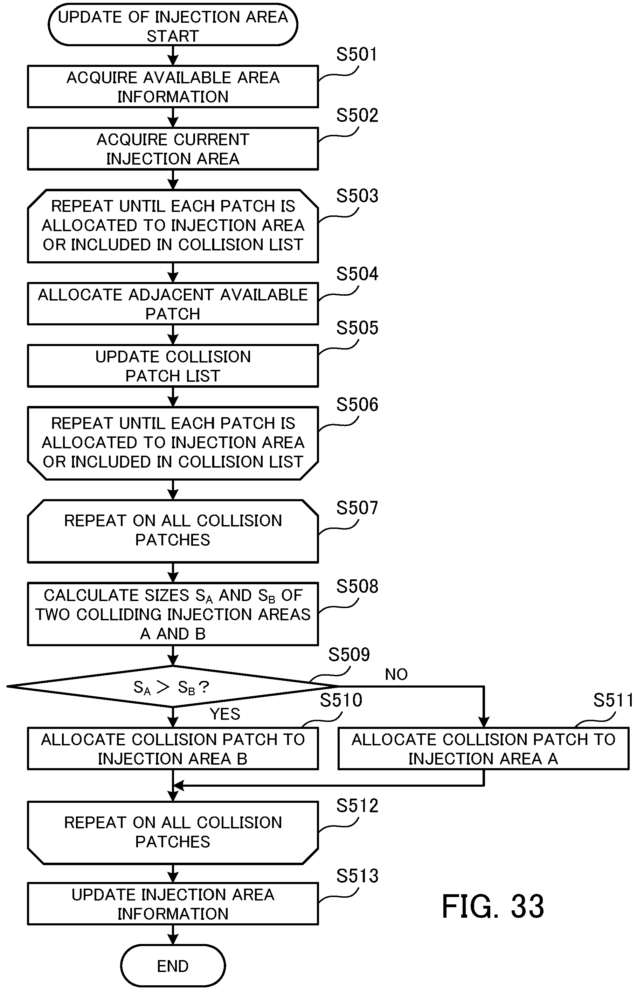

[Step S305] The phase rotation control unit 140 executes an injection area update process. Details of the injection area update process will be described later (see FIG. 33).

[Step S306] If the RUS is completed for all the phase rotations, the phase rotation control unit 140 ends the phase rotation process.

Next, the injection and logical ZZ measurement process will be described in detail.

FIG. 31 is a flowchart illustrating an example of a procedure of the first half of the injection and logical ZZ measurement process. Hereinafter, the process illustrated in FIG. 31 will be described in order of step numbers.

[Step S401] The phase rotation control unit 140 acquires successful injection patch information. For example, the phase rotation control unit 140 stores, in the memory 102, information about a patch for which the injection has succeeded as the injection determination result. At the execution timing of step S401, the phase rotation control unit 140 acquires, from the memory 102, information about the patch for which the injection has succeeded.

Before the first parallel injection in the phase rotation process is executed, the successful injection patch information (initial state) indicates that there is no successful patch.

[Step S402] The phase rotation control unit 140 determines whether there is a patch for which the injection has succeeded. If there is at least one patch for which the injection has succeeded, the phase rotation control unit 140 advances the process to step S404. If there is no patch for which the injection has succeeded, the phase rotation control unit 140 advances the process to step S403.

[Step S403] The phase rotation control unit 140 instructs the quantum computer 200 to execute parallel injection. For example, the phase rotation control unit 140 transmits, to the quantum computer 200, a quantum operation instruction for executing the injection in each patch in the injection area. In a case where there is a patch that has succeeded in the injection by the execution of the parallel injection, the successful injection patch information is updated. After updating the successful injection patch information based on the parallel injection, the phase rotation control unit 140 advances the process to step S401.

[Step S404] The phase rotation control unit 140 executes step S405 on all patches for which the injection has succeeded.

[Step S405] The phase rotation control unit 140 determines the shortest connection path for the logical ZZ measurement between a successful patch and the operation target patch of a phase rotation gate.

[Step S406] When step S405 is completed for all the patches for which the injection has succeeded, the phase rotation control unit 140 advances the process to step S407.

[Step S407] The phase rotation control unit 140 determines a patch having the shortest connection path among the patches for which the injection has succeeded.

[Step S408] The phase rotation control unit 140 instructs the quantum computer 200 to execute the logical ZZ measurement using the ancilla state indicated by the determined patch. For example, the phase rotation control unit 140 transmits, to the quantum computer 200, quantum operation instructions for executing connection between the determined patch and the operation target patch, a logical ZZ measurement, and a logical X measurement. After executing the operations according to the instructions, the quantum computer 200 transmits information indicating the rotation direction (forward rotation or reverse rotation) of the phase rotation to the classical computer 100 as an operation result.

After instructing the logical ZZ measurement, the phase rotation control unit 140 advances the process to step S409 without waiting for the operation result from the quantum computer 200.

[Step S409] The phase rotation control unit 140 determines an area available for the pre-injection. For example, the phase rotation control unit 140 determines an area including patches excluding the patches being used for the logical ZZ measurement among the patches in the injection area, as the area usable for the pre-injection.

[Step S410] The phase rotation control unit 140 determines the pre-injection rotation angle. For example, the phase rotation control unit 140 determines an angle twice the rotation angle of the injection of the patch used for the logical ZZ measurement in step S408 as the pre-injection rotation angle. Next, the phase rotation control unit 140 advances the process to step S421 (see FIG. 32).

FIG. 32 is a flowchart illustrating an example of the procedure of the second half of the injection and logical ZZ measurement process. Hereinafter, the process illustrated in FIG. 32 will be described in order of step numbers.

[Step S421] The phase rotation control unit 140 repeats step S422 until the logical ZZ measurement is completed.

[Step S422] The phase rotation control unit 140 instructs the quantum computer 200 to execute the pre-injection. For example, the phase rotation control unit 140 determines the determined patch in the pre-injection area and transmits a quantum operation instruction for executing the injection with the determined patch to the quantum computer 200. In addition, the phase rotation control unit 140 excludes the patch for which the injection has succeeded in the repetition of the pre-injection in step S422 from the subsequent pre-injection targets.

[Step S423] When the logical ZZ measurement is completed, the phase rotation control unit 140 advances the process to step S424.

[Step S424] The phase rotation control unit 140 determines whether the RUS based on the logical ZZ measurement has succeeded. For example, if the phase rotation results in the forward rotation, the phase rotation control unit 140 determines that the RUS has succeeded. If the phase rotation results in the reverse rotation, the phase rotation control unit 140 determines that the RUS has failed. If the RUS is successful, the phase rotation control unit 140 advances the process to step S425. If the RUS fails, the phase rotation control unit 140 advances the process to step S426.

[Step S425] The phase rotation control unit 140 outputs completion of the phase rotation and ends the RUS for the operation target patch.

[Step S426] The phase rotation control unit 140 determines whether there is a successful pre-injection. If at least one patch has succeeded in the injection, the phase rotation control unit 140 advances the process to step S427. If all the patches fail in the pre-injection, the phase rotation control unit 140 determines that the RUS is not completed, and ends the current injection and logical ZZ measurement process.

[Step S427] The phase rotation control unit 140 stores information about the patch for which the injection has succeeded. Then, the phase rotation control unit 140 determines that the RUS is completed, and ends the current injection and logical ZZ measurement process.

If the RUS is not completed, the phase rotation control unit 140 repeats the injection and logical ZZ measurement process while updating the injection area. If the RUS is completed, the subsequent quantum computation is executed using the state of the logical qubit indicated in the operation target patch.

Next, the injection area update process will be described in detail.

FIG. 33 is a flowchart illustrating an example of a procedure of the injection area update process. Hereinafter, the process illustrated in FIG. 33 will be described in order of step numbers.

[Step S501] The phase rotation control unit 140 acquires available area information indicating the patches not being used in the computation margin area 202c.

[Step S502] The phase rotation control unit 140 acquires the current injection area for each patch, which is the phase rotation operation target.

[Step S503] The phase rotation control unit 140 repeats steps S504 to S505 until each of the patches in the available area is allocated to any one of the injection areas or included in a collision list.

[Step S504] The phase rotation control unit 140 attempts to expand an injection area to an adjacent available patch (by one patch). If no collision occurs, the phase rotation control unit 140 allocates the expansion destination patch to the injection area. The allocated patch becomes a part of the injection area to which the patch has been allocated. As a result, the injection area is expanded.

[Step S505] The phase rotation control unit 140 updates a collision patch list. For example, when attempting to expand the injection areas, the phase rotation control unit 140 registers a collision patch in which a plurality of injection areas collide with each other in the collision patch list.

[Step S506] When each of the patches in the available area has been allocated to any one of the injection areas or included in the collision list, the phase rotation control unit 140 advances the process to step S507.

[Step S507] The phase rotation control unit 140 executes steps S508 to S511 for all the collision patches.

[Step S508] The phase rotation control unit 140 calculates the size of an injection area A and the size of an injection area B, the two injection areas colliding in the collision patch. The phase rotation control unit 140 sets the size of the injection area A to "$S_A$" and the size of the injection area B to "$S_B$".

[Step S509] The phase rotation control unit 140 compares the size "$S_A$" of the injection area A with the size "$S_B$" of the injection area B. If the size "$S_A$" of the injection area A is larger ($S_A > S_B$), the phase rotation control unit 140 advances the process to step S510. If the size "$S_A$" of the injection area A is equal to or smaller than the size "$S_B$" of the injection area B ($S_A \leq S_B$), the phase rotation control unit 140 advances the process to step S511.

[Step S510] The phase rotation control unit 140 allocates the collision patch to the injection area B. The phase rotation control unit 140 then advances the process to step S512.

[Step S511] The phase rotation control unit 140 allocates the collision patch to the injection area A.

[Step S512] When steps S508 to S511 are completed for all the collision patches, the phase rotation control unit 140 advances the process to step S513.

[Step S513] The phase rotation control unit 140 updates the injection area information.

As described above, when there is a phase rotation gate in a quantum circuit, an ancilla state used for the phase rotation in the STAR architecture is efficiently generated by parallel injection and pre-injection. As a result, less time is needed to generate the ancilla state, and the operation of the phase rotation gate is prevented from being prolonged.

When a new available area is added during a logical ZZ measurement, the pre-injection is executed using this available area. This increases the probability that the injection will succeed in any of the patches in the pre-injection.

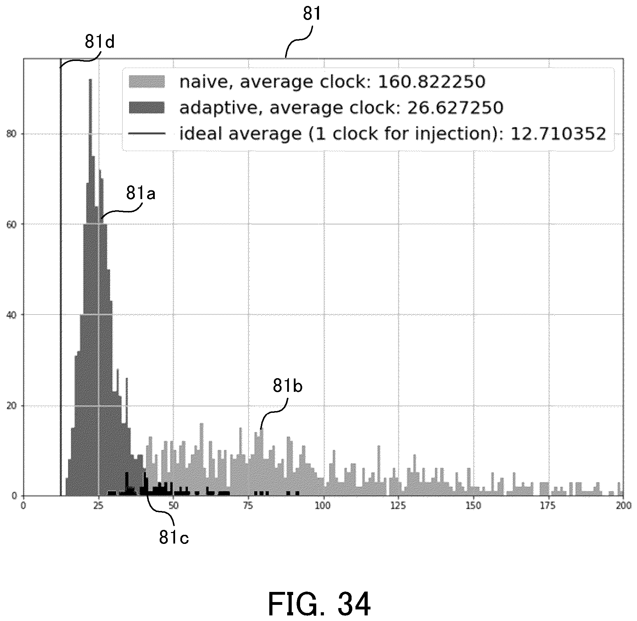

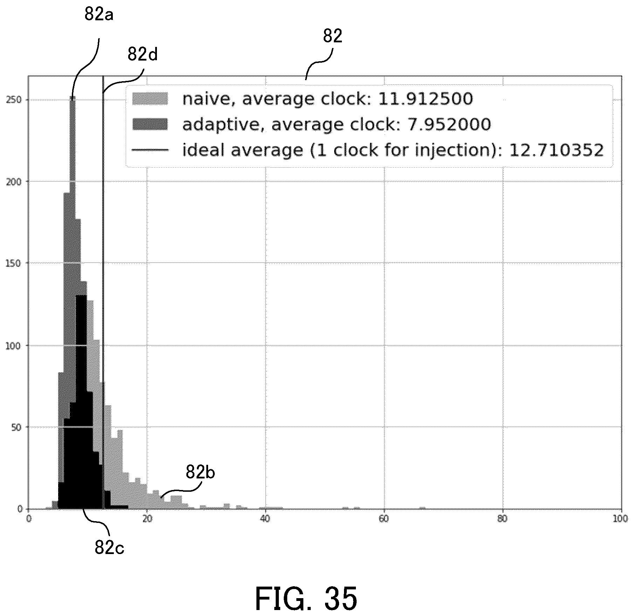

Hereinafter, a verification result of the phase rotation gate operation time in a case where the injection generation efficiency improvement process (the parallel injection, the pre-injection, and the real-time update of the injection area) is applied will be described with reference to FIGS. 34 and 35. The following verification was executed by comparing the computation time obtained when the injection generation efficiency improvement process was applied with the computation time obtained when the injection generation efficiency improvement process was not applied in a case where phase rotation gates were simultaneously executed on 32 logical qubits.

When the injection generation efficiency improvement process was not applied, the injection area was fixed to one patch, and even if an available area was generated, this area was not allocated to the injection area.

FIG. 34 is a diagram illustrating a first example of the verification result of the gate operation time of phase rotation gates. The example in FIG. 34 is an example of a case where the injection failure probability is relatively large. The results of 1000 simulated logic gate operations of 32 parallel phase rotation gates are illustrated in histogram form in a graph 81.

In the graph 81, the horizontal axis represents the time needed until the end of the logic gate operation of the individual phase rotation gate, and the vertical axis represents the number of samples that have ended in the corresponding time among the 1000 samples. A histogram 81a indicates a simulation result when the injection generation efficiency improvement process was applied. A histogram 81b indicates a simulation result when the injection generation efficiency improvement process was not applied.

A black area 81c is a portion where the histogram 81a and the histogram 81b overlap. A vertical line 81d indicates the average execution time when the time needed for the injection is fixed to a unit time.

The average time needed for the 1000 phase rotation gates when the injection efficiency improvement process was not applied was "160.822250". On the other hand, the average time needed for the 1000 phase rotation gates when the injection efficiency improvement process was applied was "26.627250".

As seen from the graph 81, when the injection generation efficiency improvement process was not applied, the logic gate operations of many phase rotation gates were prolonged. This is because failure in injection continued, and it took time for the logic gate operations of the phase rotation gates accordingly.

When the injection generation efficiency improvement process was applied, the injection areas that had been used in the logic gate operations of the completed phase rotation gates became usable for the logic gate operations of the phase rotation gates that took time to generate injections. Therefore, the longer the generation of an injection was, the wider the injection area became, and the failure probability was exponentially suppressed.

FIG. 35 is a diagram illustrating a second example of the verification result of the gate operation time of the phase rotation gates. The example in FIG. 35 is an example of a case where the injection failure probability is relatively small. The results of 1000 simulated logic gate operations of 32 parallel phase rotation gates are illustrated in histogram form in a graph 82.

In the graph 82, the horizontal axis represents the time needed until the end of the logic gate operation of the individual phase rotation gate, and the vertical axis represents the number of samples that have ended in the corresponding time among the 1000 samples. A histogram 82a indicates a simulation result when the injection generation efficiency improvement process was applied. A histogram 82b indicates a simulation result when the injection generation efficiency improvement process was not applied.

A black area 82c is a portion where the histogram 82a and the histogram 82b overlap. A vertical line 82d indicates the average execution time when the time needed for the injection is fixed to a unit time.

The average time needed for the 1000 phase rotation gates when the injection efficiency improvement process was not applied was "11.912500". On the other hand, the average time needed for the 1000 phase rotation gates when the injection efficiency improvement process was applied was "7.952000".

As indicated in the graph 82, since the failure probability is small, the logic gate operations of the phase rotation gates are executable at high speed without executing the injection generation efficiency improvement process. Even in such a case, by executing the injection generation efficiency improving process, the logic gate operations of the phase rotation gates are further speeded up. This is because the overhead of the injection process is suppressed by the pre-injection during the logical ZZ measurement.

[Other Embodiments]

In the second embodiment, the phase rotation circuit 50 (see FIG. 7) using the logical ZZ measurement is used for the logic gate operation of a phase rotation gate. However, the logic gate operation of the phase rotation gate is executable by using another quantum circuit. For example, the logic gate operation of the phase rotation gate is executable by using the gate teleportation circuit described in Yutaro Akahoshi et al., "Partially Fault-tolerant Quantum Computing Architecture with Error-corrected Clifford Gates and Space-time Efficient Analog Rotations".

Although the embodiments have been described, the configuration of each unit described in the embodiments may be replaced with another configuration having an equivalent function. In addition, any other components or processes may be added. Furthermore, any two or more configurations (features) of the above-described embodiments may be combined.

According to one aspect, it is possible to suppress an increase in the execution time of phase rotation gates.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A computer program that causes a computer to execute a process comprising:

   instructing a quantum computer (1) to execute an operation of generating a first ancilla state used for phase rotation of a first rotation angle of a state of a logical qubit (2) by using, as an operation target, each of a plurality of partial areas (3a, 3b) in an available area (4) in which physical qubits available for the phase rotation of the first rotation angle are arranged; and
   instructing the quantum computer (1) to execute a phase rotation operation using the first ancilla state indicated in a first partial area in which the first ancilla state has been successfully generated, by using the logical qubit (2) as an operation target.

2. The computer program according to claim 1, wherein the instructing of the quantum computer (1) to execute the phase rotation operation includes

   instructing the quantum computer (1) to execute a phase rotation circuit that stochastically applies either phase rotation in a target rotation direction or phase rotation in a direction opposite to the target rotation direction to the logical qubit (2), and
   instructing the quantum computer (1) to execute, while the quantum computer (1) is executing the phase rotation circuit, an operation of generating a second ancilla state used for phase rotation of a second rotation angle that is twice the first rotation angle, by using, as an operation target, a second partial area that is not being used by the phase rotation circuit among the plurality of partial areas (3a, 3b) in the available area (4); and
   instructing, in response to occurrence of phase rotation in the opposite direction as a result of execution of the phase rotation circuit, the quantum computer (1) to execute a gate operation of the phase rotation circuit using the second ancilla state indicated in the second partial area as an input on the logical qubit (2) as an operation target.

3. The computer program according to claim 2, wherein the instructing of the quantum computer (1) to execute the operation of generating the second ancilla state includes instructing the quantum computer (1) to repeatedly execute generation of the second ancilla state using the second partial area until the second ancilla state is successfully generated in the second partial area while the quantum computer (1) is executing the gate operation of the phase rotation circuit.

4. The computer program according to claim 2 or 3, wherein the instructing of the quantum computer (1) to execute the operation of generating the second ancilla state includes updating a range of the available area (4) based on a use state of a physical qubit outside the available area (4) while the quantum computer (1) is executing the gate operation of the phase rotation circuit.

5. The computer program according to any of the preceding claims, wherein the process further includes:
   allocating, in a case in which there are a plurality of logical qubits (2) as operation targets, an area allocatable to two or more of the available areas (4), each of which corresponds to one of the plurality of logical qubits (2), to an available area having a smaller size among the available areas (4) to which the area is allocatable.

6. A quantum computation support method executed by a computer, the quantum computation support method comprising:

   instructing a quantum computer (1) to execute an operation of generating a first ancilla state used for phase rotation of a first rotation angle of a state of a logical qubit (2) by using, as an operation target, each of a plurality of partial areas (3a, 3b) in an available area (4) in which physical qubits available for the phase rotation of the first rotation angle are arranged; and
   instructing the quantum computer (1) to execute a phase rotation operation using the first ancilla state indicated in a first partial area in which the first ancilla state has been successfully generated, by using the logical qubit (2) as an operation target.

7. An information processing apparatus comprising:

   processing means (12) for
   instructing a quantum computer (1) to execute an operation of generating a first ancilla state used for phase rotation of a first rotation angle of a state of a logical qubit (2) by using, as an operation target, each of a plurality of partial areas (3a, 3b) in an available area (4) in which physical qubits available for the phase rotation of the first rotation angle are arranged, and

instructing the quantum computer (1) to execute a phase rotation operation using the first ancilla state indicated in a first partial area in which the first ancilla state has been successfully generated, by using the logical qubit (2) as an operation target.

FIG. 1

FIG. 2

QUANTUM COMPUTING SYSTEM

300

QUANTUM COMPUTER 200

QUANTUM OPERATION PROCESSING DEVICE 201

QUBIT DEVICE 202

QUBIT CONTROL SIGNAL GENERATOR 203

CLASSICAL COMPUTER 100

101 PROCESSOR

102 MEMORY

103 STORAGE DEVICE

108 NETWORK INTERFACE

104 GPU

105 INPUT INTERFACE

106 OPTICAL DRIVE DEVICE

107 DEVICE CONNECTION INTERFACE

109 BUS

20 NETWORK

21 MONITOR

22 KEYBOARD

23 MOUSE

24 OPTICAL DISC

25 MEMORY DEVICE

26 MEMORY READER-WRITER

27 MEMORY CARD

FIG. 3

FIG. 4

PHYSICAL QUBITS

42a        42b              42n

42 LOGICAL QUBIT

42
42a        42b              42n

OCCURRENCE
OF ERROR

42
42a        42b              42n

DETECTION
AND
CORRECTION

FIG. 5

43a    43b    43c    43d

H GATE    CNOT GATE    S GATE    T GATE

Clifford
OPERATOR

NON-Clifford
OPERATOR

Clifford+T

43a    43b    43c    43e

H GATE    CNOT GATE    S GATE    PHASE
ROTATION
GATE

BASIC GATES IN STAR
ARCHITECTURE

FIG. 6

43e PHASE ROTATION
GATE

$R_Z(\theta)$

50 PHASE ROTATION
CIRCUIT

GATE OPERATION
TARGET
$|\psi\rangle_L$

ANCILLA STATE
$|m_\theta\rangle_L$

50a

50c

Z

$M_{ZZ}$

$M_X$

50b

$R_Z(\theta)|\psi\rangle_L$ or $R_Z(-\theta)|\psi\rangle_L$

$|\psi\rangle_L$

$R_Z(\theta)$

$R_Z(\theta)|\psi\rangle_L$

$R_Z(-\theta)|\psi\rangle_L$

$R_Z(2\theta)$

$R_Z(\theta)|\psi\rangle_L$

$R_Z(-3\theta)|\psi\rangle_L$

...

AVERAGE NUMBER OF TIMES
OF EXECUTION OF ROTATION
UNTIL ROTATION SUCCEEDS

$$1 \times \frac{1}{2} + 2 \times \frac{1}{4} + \cdots = \sum_n n2^{-n} = 2$$

FIG. 7

FIG. 8

52 ⌊⌊4,1,1,2⌋⌋ CODE

52a SURFACE CODE

FIG. 9

PHASE ROTATION
50    CIRCUIT

GATE OPERATION
TARGET
$|\psi\rangle_L$

ANCILLA STATE
$|m_\theta\rangle_L$

$M_{ZZ}$    50a

50c    Z

50b    $M_X$

FIG. 10

60  LOGICAL QUBIT

61 X BOUNDARY

62 Z BOUNDARY    63  PATCH

=

FIG. 11

60a   60b

63a
PATCH   63b PATCH   64
STABILIZER
OPERATOR

MERGING   SPLITTING

63c  MERGED PATCH

FIG. 12

65 SPLITTING
PORTION

60c

60d

66
EXPANSION AREA

PATCH 63d

EXPANSION        REDUCTION

FIG. 13

63e EXPANDED PATCH

67 REDUCTION
AREA

60e

LOGICAL X ⊗ LOGICAL X MEASUREMENT

FIG. 14

LOGICAL CNOT

FIG. 15

202   QUBIT DEVICE

| | | | |
|---|---|---|---|
| 0 | 1 | 2 | 3 |
| 4 | 5 | 6 | 7 |
| 8 | 9 | 10 | 11 |
| 12 | 13 | 14 | 15 |

202a LOGICAL QUBIT AREA

202c COMPUTATION MARGIN AREA

202b LOGICAL QUBIT AREA

# FIG. 16

50 PHASE ROTATION CIRCUIT

GATE OPERATION
TARGET

$|\psi\rangle_L$

ANCILLA STATE

$|m_\theta\rangle_L$

50a

$M_{ZZ}$

50c

Z

50b

$M_X$

$R_Z(\theta)|\psi\rangle_L$ or $R_Z(-\theta)|\psi\rangle_L$

71

$|\psi\rangle_L$

71

$|\psi\rangle_L$

$|m_\theta\rangle_L$

72

71

$|\psi\rangle_L$

$|m_\theta\rangle_L$

72

71

$|\psi\rangle_L$

ANCILLA
STATE
GENERATION

LOGICAL ZZ
MEASUREMENT

LOGICAL X
MEASUREMENT

MERGING

SPLITTING

FIG. 17

73

INJECTION AREA

74

74b

74a

$|\psi\rangle_L$

$|m_\theta\rangle_L$   $|m_\theta\rangle_L$

74c

$|m_\theta\rangle_L$   $|m_\theta\rangle_L$

74d

74e

PARALLEL INJECTION

FIG. 18

FIG. 19

75a

$|\psi\rangle_L$

75a

$|\psi\rangle_L$

75b      75c

$|m_\theta\rangle_L$
(SUCCESS)

$|m_\theta\rangle_L$
(FAILURE)

$|m_\theta\rangle_L$
(FAILURE)

$|m_\theta\rangle_L$
(FAILURE)

75d     75e

PARALLEL
INJECTION

75b      75c

$|m_\theta\rangle_L$

$|m_{2\theta}\rangle_L$
(FAILURE)

$|m_{2\theta}\rangle_L$
(SUCCESS)

$|m_{2\theta}\rangle_L$
(FAILURE)

75d     75e

LOGICAL ZZ
MEASUREMENT
& PRE-INJECTION

FAILURE OF RUS

FIG. 20

75a

$R_Z(-\theta)|\psi\rangle_L$

75b      75c

$|m_{2\theta}\rangle_L$
(SUCCESS)

75d     75e

LATTICE
SURGERY

75a

$R_Z(-\theta)|\psi\rangle_L$

75b      75c

$|m_{2\theta}\rangle_L$

$|m_{4\theta}\rangle_L$

$|m_{4\theta}\rangle_L$

75d     75e

LOGICAL ZZ
MEASUREMENT
& PRE-INJECTION

SUCCESS
OF RUS

75a

$R_Z(\theta)|\psi\rangle_L$

FIG. 21

FIG. 22

ALLOCATION OF
INJECTION AREAS

PARALLEL
INJECTION

SHORTEST
PATH SEARCH

FIG. 23

30

**TERMINAL DEVICE**

100

**CLASSICAL COMPUTER**

110

**QUANTUM COMPUTATION REQUEST RECEPTION UNIT**

120

**QUANTUM CIRCUIT EXECUTION CONTROL UNIT**

130

**Clifford OPERATION CONTROL UNIT**

140

**PHASE ROTATION CONTROL UNIT**

200

**QUANTUM COMPUTER**

# FIG. 24

COMPLETION OF
PHASE ROTATION

PHASE ROTATION
INSTRUCTION (OPERATION
TARGET PATCH AND
ROTATION ANGLE $\theta$ )

QUANTUM GATE
EXECUTION STATUS
INFORMATION

— 140

PHASE ROTATION
CONTROL UNIT

— 141

INJECTION AREA
DETERMINATION
UNIT

— 144

PHASE ROTATION
RESULT
DETERMINATION
UNIT

RUS EXECUTION
INSTRUCTION

— 143

INJECTION
RESULT
DETERMINATION
UNIT

— 142

RUS EXECUTION
CONTROL UNIT

— 200

QUANTUM COMPUTER

FIG. 25

QUANTUM GATE
EXECUTION STATUS
INFORMATION

141

INJECTION AREA
DETERMINATION UNIT

141a

COMPUTATION MARGIN
AREA MANAGEMENT UNIT

AVAILABLE AREA
INFORMATION

141b

RUS EXECUTION
MANAGEMENT UNIT

141c

INJECTION AREA
UPDATE UNIT

REALLOCATION
INSTRUCTION

RUS EXECUTION
INSTRUCTION

INJECTION AREA
INFORMATION

FIG. 26

INJECTION AREA
INFORMATION

RUS EXECUTION
INSTRUCTION

INJECTION RESULT
INFORMATION AND
PHASE ROTATION RESULT
INFORMATION

— 142

RUS EXECUTION
CONTROL UNIT

— 142a

LOGICAL ZZ
MEASUREMENT AREA
DETERMINATION UNIT

USE AREA
INFORMATION

— 142b

INJECTION
EXECUTION
MANAGEMENT UNIT

PARALLEL
INJECTION OR
PRE–INJECTION
EXECUTION
INSTRUCTION

INJECTION
INSTRUCTION

— 142c

QUANTUM
OPERATION
EXECUTION
MANAGEMENT UNIT

LOGICAL ZZ
MEASUREMENT
EXECUTION
INSTRUCTION

— 142d

INJECTION
EXECUTION
CONTROL UNIT

— 142e

LOGICAL ZZ
MEASUREMENT
EXECUTION
CONTROL UNIT

QUANTUM
OPERATION
INSTRUCTION

QUANTUM
OPERATION
INSTRUCTION

FIG. 27

START

DECOMPOSE
QUANTUM CIRCUIT
(Clifford + $\phi$) — S101

LOGICAL QUBIT
INITIALIZATION — S102

EXECUTE
QUANTUM
CIRCUIT — S103

TRANSMIT
COMPUTATION
RESULT — S104

END

FIG. 28

FIG. 29

```
           ┌─────────────────────┐
          (  PHASE ROTATION       )
          (    PROCESS            )
          (    START             )
           └─────────────────────┘
                     │
                     ▼
           ┌─────────────────────┐    S301
           │  DETERMINE INITIAL  │
           │   INJECTION AREA    │
           └─────────────────────┘
                     │
                     ▼
           ┌─────────────────────┐    S302
          /  REPEAT UNTIL COMPLETION OF /
          /     ALL RUSs              /
           └─────────────────────┘
                     │
                     ▼
          ┌┃─────────────────────┃┐   S303
          ┃│ INJECTION AND LOGICAL ZZ │┃
          ┃│    MEASUREMENT         │┃
          └┃─────────────────────┃┘
                     │
                     ▼
                   ╱─────────╲         S304      YES
                 ╱  IS AVAILABLE AREA  ╲──────────────┐
                 ╲   GENERATED?        ╱              │
                   ╲─────────╱                        │
                     │  NO                            ▼
                     │              ┌┃────────────────────┃┐  S305
                     │              ┃│  UPDATE INJECTION AREA │┃
                     │              └┃────────────────────┃┘
                     │◄──────────────────────┘
                     ▼
           ┌─────────────────────┐    S306
          /  REPEAT UNTIL COMPLETION OF /
          /     ALL RUSs              /
           └─────────────────────┘
                     │
                     ▼
           ┌─────────────────────┐
          (        END            )
           └─────────────────────┘
```

# FIG. 30

INJECTION AND LOGICAL
ZZ MEASUREMENT
START

ACQUIRE SUCCESSFUL INJECTION
PATCH INFORMATION — S401

IS THERE ANY
SUCCESSFUL PATCH? — S402

NO

INSTRUCT QUANTUM COMPUTER TO
EXECUTE PARALLEL INJECTION — S403

YES

REPEAT ON ALL SUCCESSFUL PATCHES — S404

DETERMINE CONNECTION PATH FOR
LOGICAL ZZ MEASUREMENT — S405

REPEAT ON ALL SUCCESSFUL PATCHES — S406

DETERMINE PATCH HAVING SHORTEST
CONNECTION PATH — S407

INSTRUCT QUANTUM COMPUTER TO
EXECUTE LOGICAL ZZ MEASUREMENT — S408

DETERMINE PRE-INJECTION AREA — S409

DETERMINE PRE-INJECTION ROTATION
ANGLE — S410

A

FIG. 31

A

REPEAT UNTIL COMPLETION OF
LOGICAL ZZ MEASUREMENT
S421

INSTRUCT QUANTUM COMPUTER TO
EXECUTE PRE-INJECTION
S422

REPEAT UNTIL COMPLETION OF
LOGICAL ZZ MEASUREMENT
S423

HAS RUS SUCCEEDED?
S424

YES

OUTPUT COMPLETION OF PHASE
ROTATION
S425

NO

IS THERE ANY
SUCCESSFUL
PRE-INJECTION?
S426

NO

YES

STORES INFORMATION
ABOUT PATCH
S427

END

FIG. 32

```
          ┌─────────────────────────────┐
          │  UPDATE OF INJECTION AREA    │
          │          START              │
          └─────────────────────────────┘
                       │
                       ▼                    S501
          ┌─────────────────────────────┐
          │  ACQUIRE AVAILABLE AREA      │
          │       INFORMATION           │
          └─────────────────────────────┘
                       │
                       ▼                    S502
          ┌─────────────────────────────┐
          │     ACQUIRE CURRENT          │
          │     INJECTION AREA           │
          └─────────────────────────────┘
                       │
                       ▼                    S503
          ┌─────────────────────────────┐
          │  REPEAT UNTIL EACH PATCH IS  │
          │  ALLOCATED TO INJECTION AREA │
          │  OR INCLUDED IN COLLISION LIST│
          └─────────────────────────────┘
                       │
                       ▼                    S504
          ┌─────────────────────────────┐
          │  ALLOCATE ADJACENT AVAILABLE │
          │          PATCH              │
          └─────────────────────────────┘
                       │
                       ▼                    S505
          ┌─────────────────────────────┐
          │     UPDATE COLLISION         │
          │       PATCH LIST            │
          └─────────────────────────────┘
                       │
                       ▼                    S506
          ┌─────────────────────────────┐
          │  REPEAT UNTIL EACH PATCH IS  │
          │  ALLOCATED TO INJECTION AREA │
          │  OR INCLUDED IN COLLISION LIST│
          └─────────────────────────────┘
                       │
                       ▼                    S507
          ┌─────────────────────────────┐
          │   REPEAT ON ALL COLLISION    │
          │        PATCHES              │
          └─────────────────────────────┘
                       │
                       ▼                    S508
          ┌─────────────────────────────┐
          │  CALCULATE SIZES SA AND SB OF│
          │  TWO COLLIDING INJECTION AREAS│
          │          A AND B            │
          └─────────────────────────────┘
                       │
                       ▼                    S509
                  ╱─────────╲         NO
                 ╱  SA > SB ? ╲──────────────┐
                 ╲           ╱               │
                  ╲─────────╱                │
                   │ YES                     │
                   ▼      S510               ▼      S511
          ┌──────────────────────┐  ┌──────────────────────┐
          │ ALLOCATE COLLISION    │  │ ALLOCATE COLLISION    │
          │ PATCH TO INJECTION    │  │ PATCH TO INJECTION    │
          │ AREA B                │  │ AREA A                │
          └──────────────────────┘  └──────────────────────┘
                   │                         │
                   ▼◄────────────────────────┘
                                        S512
          ┌─────────────────────────────┐
          │   REPEAT ON ALL COLLISION    │
          │        PATCHES              │
          └─────────────────────────────┘
                       │
                       ▼                    S513
          ┌─────────────────────────────┐
          │   UPDATE INJECTION AREA      │
          │       INFORMATION           │
          └─────────────────────────────┘
                       │
                       ▼
                 ┌───────────┐
                 │    END    │
                 └───────────┘
```

Calculate sizes $S_A$ and $S_B$ of two colliding injection areas A and B

$S_A > S_B$ ?

FIG. 33

FIG. 34

FIG. 35

| | Europäisches Patentamt European Patent Office Office européen des brevets | **EUROPEAN SEARCH REPORT** | **Application Number** EP 25 19 0276 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | YUTARO AKAHOSHI ET AL: "Partially Fault-tolerant Quantum Computing Architecture with Error-corrected Clifford Gates and Space-time Efficient Analog Rotations", ARXIV.ORG, CORNELL UNIVERSITY LIBRARY, 201 OLIN LIBRARY CORNELL UNIVERSITY ITHACA, NY 14853, 23 March 2023 (2023-03-23), XP091466791, * page 5 - page 7 * * page 9 * * figures 7, 12, 17, 20,21 * ----- | 1-7 | INV. G06N10/20 G06N10/40 G06N10/60 G06N10/70 |
| | | | TECHNICAL FIELDS SEARCHED (IPC) G06N |

The present search report has been drawn up for all claims

| Place of search | Date of completion of the search | Examiner |
|---|---|---|
| The Hague | 26 November 2025 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 685 710 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUTARO AKAHOSHI** ; **KAZUNORI MARUYAMA** ; **HIROTAKA OSHIMA** ; **SHINTARO SATO** ; **KEISUKE FUJII**. Partially Fault-tolerant Quantum Computing Architecture with Error-corrected Clifford Gates and Space-time Efficient Analog Rotations. *PRX Quantum*, 05 March 2024, vol. 5
- **DOMINIC HORSMAN** ; **AUSTIN G FOWLER** ; **SIMON DEVITT** ; **RODNEY VAN METER**. Surface code quantum computing by lattice surgery. *New Journal of Physics*, 07 December 2012, vol. 14

- **DANIEL LITINSKI**. A Game of Surface Codes: Large-Scale Quantum Computing with Lattice Surgery. *Quantum*, 05 March 2019, vol. 3, 128
- **YUTARO AKAHOSHI et al.** *Partially Fault-tolerant Quantum Computing Architecture with Error-corrected Clifford Gates and Space-time Efficient Analog Rotations*